(19) **Europäisches Patentamt / European Patent Office / Office européen des brevets**

(11) **EP 3 479 344 B1**

(12) **FASCICULE DE BREVET EUROPEEN**

(45) Date de publication et mention
de la délivrance du brevet:
**09.12.2020 Bulletin 2020/50**

(21) Numéro de dépôt: **17742822.4**

(22) Date de dépôt: **29.06.2017**

(51) Int Cl.:
*G06T 5/00* (2006.01)       *G06T 19/20* (2011.01)
*G06T 11/00* (2006.01)      *G06K 9/00* (2006.01)
*G06Q 30/06* (2012.01)      *G06T 7/70* (2017.01)
*G06T 7/73* (2017.01)       *G06T 7/90* (2017.01)
*G06T 19/00* (2011.01)

(86) Numéro de dépôt international:
**PCT/FR2017/051744**

(87) Numéro de publication internationale:
**WO 2018/002533 (04.01.2018 Gazette 2018/01)**

(54) **PROCÉDÉ D'OCCULTATION D'UN OBJET DANS UNE IMAGE OU UNE VIDÉO ET PROCÉDÉ DE RÉALITÉ AUGMENTÉE ASSOCIÉ**

VERFAHREN ZUM VERBERGEN EINES OBJEKTS IN EINEM BILD ODER EINEM VIDEO UND ZUGEHÖRIGES VERFAHREN FÜR ERWEITERTE REALITÄT

METHOD FOR CONCEALING AN OBJECT IN AN IMAGE OR A VIDEO AND ASSOCIATED AUGMENTED REALITY METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2016 FR 1656154**
**05.10.2016 US 201615285554**

(43) Date de publication de la demande:
**08.05.2019 Bulletin 2019/19**

(73) Titulaire: **Fittingbox**
**31670 Labege (FR)**

(72) Inventeurs:
• **CHOUKROUN, Ariel**
**31650 Saint Orens de Gameville (FR)**

• **GUENARD, Jérome**
**89240 Chevannes (FR)**

(74) Mandataire: **Ipside**
**6, Impasse Michel Labrousse**
**31100 Toulouse (FR)**

(56) Documents cités:
**WO-A1-2010/042990       WO-A1-2016/020921**
**WO-A1-2016/050729       US-A1- 2015 055 085**

• **XIAO-JUN LI ET AL: "Research and Application of Online Product Display Technology Based on Augmented Reality", INFORMATION TECHNOLOGY JOURNAL, vol. 12, no. 6, janvier 2013 (2013-01), pages 1134-1142, XP055351955, PK ISSN: 1812-5638, DOI: 10.3923/itj.2013.1134.1142**

**Description**

**DOMAINE TECHNIQUE DE L'INVENTION**

Le domaine de l'invention est celui du traitement d'image et de la synthèse d'images.

Plus précisément, l'invention concerne un procédé d'occultation d'un objet dans une image ou une vidéo.

L'invention trouve notamment des applications dans le domaine de la réalité augmentée permettant l'essayage d'une paire de lunettes virtuelle par un individu portant lors de l'essayage une paire de lunettes réelle.

**ETAT DE LA TECHNIQUE**

Pour un individu portant une paire de lunettes correctives, il est difficile d'essayer une nouvelle paire de lunettes avant de les acheter. En effet, les nouvelles montures comprenant au moment de l'essayage des verres sans aucune correction optique, l'utilisateur ne peut se voir qu'à la précision de sa déficience visuelle. Ainsi, par exemple pour un utilisateur myope moyen, l'utilisateur doit s'approcher à moins de vingt centimètres du miroir pour pouvoir s'observer. Il ne peut donc apprécier par lui-même si la nouvelle monture lui va bien. Ceci est d'autant plus complexe dans le cas de l'essayage d'une paire de lunettes solaires, où les verres teintées réduisent fortement la luminosité, diminuant d'autant plus la visibilité de l'utilisateur.

Il est connu de l'art antérieur des techniques permettant de supprimer une paire de lunettes d'une image, notamment dans le cadre de la reconnaissance faciale de personnes.

Ces techniques sont basées sur la reconnaissance du visage, notamment de points caractéristiques permettant de détecter la position des yeux. Cette détection couplée à un apprentissage des différences entre les visages portant une paire de lunettes et ceux n'en portant pas, permet de reconstruire une image d'un individu sans paire de lunettes à partir d'une image de l'individu portant une paire de lunettes.

L'inconvénient majeur de cette technique est qu'elle reconstruit statistiquement le visage à partir d'images d'individus selon un angle de vue identique, généralement de face. Cette technique ne fonctionnant qu'en deux dimensions, considère uniquement l'intérieur de l'enveloppe 2D du visage sur l'image. En d'autres termes, tous les éléments de la paire de lunettes superposés avec un arrière-plan du visage ne sont pas considérés par cette technique, ce qui est pénalisant sur des images présentant des paires de lunettes plus larges que le visage ou lorsque le visage n'est pas de face sur l'image.

Un autre inconvénient majeur de cette technique est qu'elle ne prend en compte que des paires de lunettes ayant notamment une monture très fine, excluant ainsi toutes les paires de lunettes ayant une monture épaisse.

Il est également connu de l'art antérieur des techniques permettant à un individu de se voir virtuellement sur un écran par l'intermédiaire d'un avatar, en train d'essayer une nouvelle paire de lunettes.

Le document WO2010/042990 de SEEING MACHINES LTD. a pour objet une méthode d'essayage virtuel de lunettes pouvant être utilisée par un porteur d'une paire de lunettes réelle.

Ces techniques sont basées sur l'acquisition préalable d'images de l'individu ne portant pas de paire de lunettes. Ces images permettent de créer un modèle virtuel de la tête de l'individu sur laquelle le modèle de la nouvelle paire de lunettes est ajouté.

L'inconvénient majeur de cette technique est qu'elle ne permet pas d'obtenir une technique réaliste où le porteur de lunettes peut voir son image à l'écran, comme dans un miroir, en train d'essayer une nouvelle paire de lunettes.

Enfin, il existe des systèmes de réalité augmentée qui permettent d'essayer une paire de lunettes virtuelle.

A l'heure actuelle, aucun des systèmes de réalité augmentée existants ne permet d'enlever virtuellement un objet réel, comme par exemple une paire de lunettes, sur un ou plusieurs individus portant cet objet.

**OBJECTIFS DE L'INVENTION**

La présente invention vise à remédier à tout ou partie des inconvénients de l'état de la technique cités ci-dessus.

Un des principaux objectifs de l'invention est de proposer une technique qui permette à un utilisateur portant un dispositif de vision réel de se voir sur un écran, comme dans un miroir, sans le dispositif de vision réel sur le visage et d'essayer un objet virtuel remplaçant à l'écran le dispositif de vision réel conservé sur le visage.

Un autre objectif de l'invention est de proposer une technique qui soit réaliste pour l'utilisateur.

Un autre objectif de l'invention est de proposer une technique qui fonctionne en temps réel.

Un autre objectif de l'invention est de proposer une technique qui permette à l'utilisateur essayant un objet virtuel de bouger la tête dans n'importe quel sens.

Un objectif de l'invention est également de proposer une technique de suppression de la partie visible d'un objet, notamment une paire de lunettes, sur une image ou une vidéo, mais aussi des interactions lumineuses locales comme les reflets des verres ou les ombres portées.

## EXPOSÉ DE L'INVENTION

Ces objectifs, ainsi que d'autres qui apparaîtront par la suite sont atteints à l'aide d'un procédé de génération d'une image finale à partir d'une image initiale comprenant un objet apte à être porté par un individu.

L'objet peut être par exemple un dispositif de vision porté sur le visage, comme une paire de lunettes ou un dispositif portable sur la tête comprenant une monture et un écran d'affichage, tel un casque de réalité virtuelle, de réalité mixte ou de réalité augmentée. L'objet peut être également tout autre accessoire porté sur la tête d'un individu comme un foulard, un chapeau, du maquillage, un bijou ou une coiffure.

Il convient de souligner que l'objet est réel.

L'image est acquise par un dispositif d'acquisition d'images pouvant être une caméra, un appareil photographique ou une caméra de profondeur. La caméra de profondeur, bien connue de l'homme du métier, combine une caméra et une mesure infrarouge de la distance des éléments par rapport à l'objectif. L'image peut être seule ou incluse dans une séquence d'images, également appelée vidéo.

Selon l'invention, le procédé de génération d'une image comprend les étapes suivantes :

a) détection de la présence dudit objet dans l'image initiale ;
a') élaboration d'un masque couvrant au moins partiellement l'objet sur l'image initiale ;
b) superposition d'un premier calque sur l'image initiale, le premier calque comprenant un masque couvrant au moins partiellement l'objet sur l'image initiale ;
c) modification de l'aspect d'au moins une partie du masque.

Ainsi, le procédé permet de modifier l'aspect visuel de l'objet détecté en le couvrant d'un masque dont l'aspect est modifié. Le masque comprend des pixels couvrant une zone continue ou non sur l'image initiale. Le masque peut couvrir la totalité ou seulement une partie de l'objet. Dans l'exemple d'une paire de lunettes, le masque peut couvrir uniquement la monture de la paire de lunettes, la monture et une partie des verres, la monture et les verres en totalité, ou seulement les verres. Il convient de souligner que les ombres portées des lunettes peuvent également être couvertes par le masque.

La modification de l'aspect du masque correspond à une modification de la couleur et/ou de l'opacité d'une partie ou de la totalité des pixels du masque.

Dans un mode de réalisation particulier de l'invention, la modification de l'aspect du masque comprend une étape de remplacement de la texture d'une partie ou de la totalité de l'objet sur l'image finale.

Ainsi, il est possible pour un utilisateur de porter une paire de lunettes d'une certaine couleur et de se voir avec la même paire de lunettes avec une autre couleur. La texture de l'objet est une représentation de l'aspect extérieur de l'objet. La texture peut être par exemple liée à la couleur de l'objet, à sa constitution, comme la présence de différentes couches de matériaux poreux ou translucides. La texture peut également être liée au type de revêtement de l'objet, comme par exemple la présence d'une couche de vernis brillant ou mat.

Dans un mode de mise en œuvre particulier de l'invention, la modification de l'aspect du masque comprend une étape de détermination de la texture d'une partie ou de la totalité de l'objet, la texture reproduisant les éléments en arrière-plan de l'objet afin d'occulter tout ou partie de l'objet sur l'image finale.

Ainsi, l'objet détecté dans l'image initiale est automatiquement occulté de l'image finale. En d'autres termes, le procédé de génération d'une image finale à partir d'une image initiale est un procédé d'occultation d'un objet dans une image.

Dans un mode de mise en oeuvre particulier de l'invention, le masque couvre également tout ou partie de l'ombre portée de l'objet.

Ainsi, la modification de l'aspect du masque permet également de rendre invisible les ombres portées de l'objet. Par exemple, l'ombre d'une paire de lunettes portée sur le visage d'un individu peut être également effacée sur le visage, augmentant ainsi le réalisme de l'occultation de la paire de lunettes.

Dans un mode de réalisation particulier de l'invention, le procédé de génération d'une image comprend également l'étape suivante :

d) superposition d'un deuxième calque sur l'image initiale au-dessus du premier calque, le deuxième calque comprenant au moins un élément couvrant partiellement le masque.

Ainsi, les éléments compris dans le deuxième calque sont par exemple des cheveux couvrant une branche d'une paire de lunettes, une main située partiellement devant l'objet. La superposition des différents calques permet de conserver le réalisme de l'image finale.

Dans un mode de réalisation particulier de l'invention, le procédé de génération d'une image comprend également avant l'étape b), les étapes suivantes :

- détermination de l'orientation de l'objet par rapport à un dispositif d'acquisition de l'image initiale ;

- détermination d'une dimension caractéristique de l'objet sur l'image initiale.

Le dispositif d'acquisition de l'image initiale comprend un capteur photographique et un objectif photographique permettant de converger des images réelles sur la surface sensible du capteur photographique. L'objectif photographique comprend au moins une lentille convergente. Le dispositif d'acquisition de l'image peut être par exemple une caméra, un appareil photographique ou une webcam.

L'orientation de l'objet par rapport au dispositif d'acquisition de l'image correspond aux angles formés par l'objet dans un repère du dispositif d'acquisition. Ce repère peut-être par exemple un repère orthonormé dont un axe est confondu avec l'axe optique de l'objectif. En d'autres termes, l'objet dont l'orientation est déterminée, est suivi au cours d'une séquence d'images.

La dimension caractéristique de l'objet peut être par exemple la largeur de la monture d'une paire de lunettes.

Dans un mode de mise en œuvre particulier de l'invention, le procédé de génération d'une image comprend également avant l'étape b), les étapes suivantes :

- élaboration d'un modèle de l'objet ;
- élaboration du masque à partir de la projection géométrique du modèle tridimensionnel sur le premier calque, le modèle tridimensionnel ayant la même orientation et la même dimension caractéristique sur le premier calque que l'objet.

Ainsi, le modèle représentant l'objet se superpose virtuellement à l'objet. Il convient de souligner que le modèle de l'objet peut comporter des images bidimensionnelles déformées et aplaties selon l'orientation et la dimension de l'objet réel. Le modèle de l'objet peut également être tridimensionnel avec ou sans épaisseur. L'orientation et la dimension caractéristique du modèle correspondent à des paramètres de similitude entre le modèle de l'objet et l'objet réel. La projection du modèle tridimensionnel permet d'obtenir le masque. Le masque peut couvrir la totalité ou une partie de la résultante de la projection du modèle sur le calque. Il est à souligner que le masque peut également couvrir une zone de l'image plus importante que la projection.

Dans un mode de réalisation particulier de l'invention, l'élaboration du modèle de l'objet est effectuée à partir d'au moins une image de l'objet seul.

La génération du modèle de l'objet peut être par exemple effectuée dans un dispositif dédié à la modélisation, comprenant une boite dans laquelle l'objet vient se loger, et un ou plusieurs dispositifs d'acquisition d'images orientés vers l'objet. Une image peut suffire pour l'élaboration du modèle de l'objet, à condition qu'il s'agisse d'une vue de trois-quarts d'un objet présentant un plan de symétrie, comme par exemple une paire de lunettes. Plus généralement, l'élaboration d'un modèle de l'objet est effectuée à partir d'au moins deux images de l'objet, les images présentant l'objet sous des angles différents.

Dans un mode de mise en œuvre de l'invention, l'objet est porté sur le visage d'un individu.

Dans un mode de réalisation particulier de l'invention, l'élaboration du modèle de l'objet est effectuée à partir d'au moins une image de l'objet porté sur le visage de l'individu.

Ainsi, l'individu peut conserver l'objet sur son visage lors de la génération du modèle.

Dans un mode de réalisation particulier de l'invention, l'objet comprend une monture s'étendant de part et d'autre du visage, et au moins un verre assemblé à ladite monture.

Ainsi, l'objet peut être un dispositif de vision comme par exemple une paire de lunettes.

Dans un mode de réalisation particulier de l'invention, le procédé de génération d'une image comprend également une étape d'identification de la monture parmi les montures préalablement modélisées et stockées dans une base de données, le masque étant élaboré à partir du modèle de la monture identifiée.

Ainsi, la projection sur le premier calque du modèle de la monture identifiée et préalablement modélisée permet d'obtenir un masque réaliste de la monture. Il convient de souligner que le masque peut comprendre tout ou partie de la projection de la monture sur le premier calque. Une zone de l'image correspondant à un verre assemblé à la monture, ou à une ombre portée, peut être ajoutée au masque. Il convient également de souligner qu'une base de données peut stocker des modèles de monture et que la monture est identifiée parmi les montures stockées dans la base de données.

L'identification peut être effectuée automatiquement par le procédé ou manuellement par un individu. L'identification manuelle peut être effectuée par exemple grâce aux informations inscrites par le fabricant à l'intérieur de la monture de la paire de lunettes.

Dans un mode de réalisation particulier de l'invention, l'identification de la monture est effectuée en générant des courbes de support venant s'ajuster sur les contours de la monture.

Dans un mode de réalisation particulier de l'invention, l'identification de la monture est basée sur au moins un des critères suivants :

- forme de la monture ;

- couleur(s) de la monture ;
- texture(s) de la monture ;
- logo présenté par la monture.

Dans un mode de réalisation particulier de l'invention, le procédé de génération d'une image comprend également une étape d'élaboration d'une représentation de l'environnement de l'objet.

L'environnement comprend l'ensemble des éléments entourant l'objet sur l'image, ainsi que les éléments en arrière-plan de l'objet sur l'image. La représentation peut être sous la forme d'une image et/ou d'un modèle tridimensionnel. Par exemple, dans le cas d'une paire de lunettes portée sur un visage, la représentation de l'environnement peut comprendre un modèle du visage sur lequel est portée la paire de lunettes et/ou une image correspondant à l'arrière-plan du visage.

Dans un mode de réalisation particulier de l'invention, l'étape de modification de l'aspect du masque comprend les sous-étapes suivantes :

- projection géométrique de la représentation de l'environnement sur un calque intermédiaire superposé au premier calque ;
- détermination de la nouvelle couleur d'un pixel du masque en fonction de la couleur d'au moins un pixel du calque intermédiaire à proximité du pixel du masque.

Ainsi, la modification de l'aspect du masque permet d'occulter l'objet sur l'image finale. La projection géométrique de la représentation de l'environnement sur le calque intermédiaire permet d'obtenir une image sur laquelle le masque de l'objet est superposé. Dans le cas d'une représentation comprenant une image d'arrière-plan et un modèle tridimensionnel, la projection géométrique du modèle tridimensionnel sur le calque intermédiaire produit une image se superposant sur l'image d'arrière-plan. Le calque intermédiaire présente ainsi une représentation bidimensionnelle de l'environnement sur lequel le masque de l'objet est superposé.

Il convient de souligner que le modèle tridimensionnel est texturé.

Dans un mode de réalisation particulier de l'invention, la détermination de la nouvelle couleur met en œuvre une méthode d'édition d'image de type « *Poisson image editing* ».

Ainsi, la texture appliquée au masque est ajustée colorimétriquement en fonction de l'image initiale afin de se confondre avec elle. Les bords du masque ne sont notamment plus visibles dans l'image finale et on peut plus distinguer le masque dans cette image finale. Cette technique d'édition d'image, décrite par exemple dans le document « Poisson Image Editing » de P. Perez et M. Gangnet, résout notamment une équation de Poisson.

Dans un mode de réalisation particulier de l'invention, le procédé de génération d'une image comprend également une étape de détection de la présence d'un visage dans l'environnement et en ce que la représentation de l'environnement comprend un modèle du visage détecté sur lequel est appliquée une texture du visage.

La texture du visage est une image en deux dimensions venant s'appliquer sur le modèle. Il convient de souligner que le modèle et la texture peuvent être avantageusement réalistes. La détection de la présence du visage peut s'effectuer en détectant des points caractéristiques du visage, comme par exemple le bord des tempes, l'extrémité du nez ou du menton, voire les coins des yeux.

Dans un mode de réalisation particulier de l'invention, le procédé de génération d'une image comprend également une étape de détermination de l'orientation du visage par rapport au dispositif d'acquisition et en ce que le modèle du visage est disposé sensiblement selon l'orientation préalablement déterminée.

Ainsi, le modèle tridimensionnel représentant le visage est orienté de manière réaliste dans l'espace virtuel correspondant à la scène acquise par l'image.

Dans un mode de réalisation particulier de l'invention, le masque couvrant au moins partiellement l'objet porté sur le visage est élaboré à partir de la projection géométrique du modèle de visage sur le premier calque.

Ainsi, l'occultation de l'objet porté sur le visage est réalisée grâce à un masque élaboré à partir d'une projection du modèle de visage et non à partir d'une projection du modèle de l'objet. Il convient de souligner que ce mode de réalisation permet de s'affranchir du tracking de l'objet. Par ailleurs, le masque élaboré peut ne pas tenir compte de la dimension de l'objet, auquel cas la dimension du masque est établie en fonction de la dimension du visage. Dans le cas d'une paire de lunettes portée sur le visage, la dimension du masque est avantageusement suffisante pour couvrir la majeure partie des modèles de paires de lunettes existantes.

Dans un mode de réalisation particulier de l'invention, le procédé de génération d'une image comprend également les étapes suivantes :

- analyse d'au moins une source de lumière éclairant le visage de l'individu ;
- transformation colorimétrique de tout ou partie du modèle de visage.

Ainsi, le modèle du visage est éclairé de manière réaliste par rapport à la scène réelle.

Dans un mode de réalisation particulier de l'invention, le procédé de génération d'une image comprend également les étapes suivantes :

- estimation à partir de l'image initiale d'une transformation colorimétrique d'au moins un pixel du modèle de visage ;
- application de la transformation colorimétrique sur tout ou partie du modèle de visage.

L'estimation de la transformation colorimétrique peut être effectuée par une analyse d'au moins une source de lumière éclairant le visage de l'individu.

Dans un mode de réalisation particulier de l'invention, la couleur d'un pixel sur la texture du visage est déterminée par l'intermédiaire d'une méthode d'inpainting à partir des couleurs d'un patch à proximité du pixel.

Le patch correspond à une pluralité de pixels formant une zone continue. La forme du patch peut être carrée ou rectangulaire, chaque côté comprenant généralement entre un et cinq pixels. Un patch de forme circulaire peut être obtenu en insérant un filtre gaussien à l'intérieur d'un patch carré. La méthode d'inpainting, bien connue de l'homme du métier, permet de compléter la texture du visage, notamment dans le cas de la génération du modèle du visage d'un individu portant une paire de lunettes. En effet, dans cet exemple, la monture voire les verres masquent une partie du visage.

Dans un mode de mise en œuvre particulier de l'invention, la position du patch est située sensiblement sur la perpendiculaire par rapport au contour de la zone comprenant les pixels manquants.

Ainsi, lorsqu'une partie du visage est occultée, la couleur d'un pixel manquant de la texture du visage est rétablie à partir d'un patch à proximité du pixel manquant, le patch étant situé sur une perpendiculaire au contour de la zone occultée du visage.

Dans un mode de mise en œuvre particulier de l'invention, la position du patch est située sensiblement sur la verticale par rapport audit pixel.

Ainsi, la méthode d'inpainting respecte la typologie générale d'un visage qui comprend de part et d'autre une zone de cheveux verticale venant recouvrir une partie des tempes.

Dans un mode de réalisation particulier de l'invention, la couleur d'un pixel sur la texture du visage est déterminée par l'intermédiaire d'une méthode d'inpainting à partir du modèle du visage, préalablement établi et orienté, le modèle du visage comprenant une représentation des yeux.

Dans un mode de réalisation particulier de l'invention, le procédé de génération d'une image comprend également une étape d'identification d'au moins une zone oculaire sur la texture du visage, la zone oculaire correspondant à la position d'un œil du visage détecté.

L'identification d'une zone oculaire sur la texture du visage peut être effectuée en identifiant la position de points caractéristiques d'un œil comme par exemple les coins extérieurs et intérieurs précis d'un œil.

Dans un mode de mise en œuvre particulier de l'invention, le remplissage de la zone oculaire est effectué en connaissant la topologie de l'œil du visage détecté.

La topologie de l'œil comprend une représentation paramétrique par l'intermédiaire de courbes, des différentes zones de l'œil, notamment de l'iris et des paupières.

Ainsi, le remplissage de la zone oculaire est plus réaliste car elle respecte la position de l'iris et de la pupille. Le remplissage de l'iris peut s'effectuer par une méthode d'inpainting venant récupérer un pixel à proximité dans une zone correspondant à l'iris. Dans le cas où la zone correspondant à l'iris recouvre des pixels vides ou n'ayant pas de valeurs cohérentes, l'iris est rétabli selon une topologie standard d'iris en prenant en compte éventuellement la couleur de l'iris de l'autre œil détecté.

Dans un mode de réalisation particulier de l'invention, l'élaboration de la représentation de l'environnement de l'objet porté sur le visage d'un individu est effectuée sans détecter de visage dans l'environnement.

Ainsi, le procédé est utilisé sans détecter ni suivre le visage d'un individu.

Dans un mode de réalisation particulier de l'invention, l'élaboration de la représentation de l'environnement comprend une sous-étape de correction de la déformation optique due à un élément transparent placé entre l'environnement et un dispositif d'acquisition de l'image initiale.

Ainsi, les déformations géométriques à l'image du visage ou de l'arrière-plan causées par exemple par la réfraction d'un verre correcteur d'une paire de lunettes placée sur le visage d'un individu sont corrigées.

Dans un mode de réalisation particulier de l'invention, le procédé de génération d'une image est appliqué à tout ou partie d'une séquence d'images formant une vidéo.

Il convient de souligner que la vidéo peut être sous la forme d'un enregistrement ou d'un flux en temps réel, comme par exemple une vidéo diffusé en *streaming*, technique bien connue en soi. La vidéo peut également être un flux temps réel issu d'une caméra et visible sur un écran instantanément

Dans un mode de mise en œuvre particulier de l'invention, la représentation de l'environnement et/ou le modèle de l'objet sont mis à jour à chaque image de la séquence.

Ainsi, la représentation et/ou le modèle étant mis à jour à partir de plusieurs images de la séquence sont de plus en plus représentatifs de la réalité. Une zone masquée par l'objet, comme par exemple la partie du visage située derrière une paire de lunettes, peut ainsi être mise à jour dans la représentation de l'environnement comprenant un modèle du visage, lorsque l'individu tourne la tête. En effet, en tournant la tête, le dispositif d'acquisition de l'image initiale prend des images du visage sous de nouveaux angles de vue, ce qui améliore la connaissance du visage.

Dans un mode de réalisation particulier de l'invention, la représentation de l'environnement et/ou le modèle de l'objet est mis à jour à partir d'une pluralité d'images initiales prises selon une pluralité d'angles de vues distincts.

Les images initiales prises selon une pluralité d'angles de vues distincts peuvent provenir d'un ou plusieurs dispositifs d'acquisition d'images orientés selon des angles distincts.

Dans un mode de réalisation particulier de l'invention, la génération de l'image finale est effectuée en temps réel à partir de l'image initiale.

Ainsi, le traitement de l'image acquise est effectué dans un temps faible et garanti. Le temps du traitement d'une image acquise de l'individu permet notamment d'afficher l'image de l'individu traitée sans décalage visible pour l'individu. Le temps de traitement est inférieur à 1/10$^e$ de seconde. Le temps de traitement est préférentiellement mais non nécessairement inférieur au temps d'affichage entre deux images, qui est généralement égal à 1/25$^e$ de seconde. En d'autres termes, le traitement en temps réel permet d'afficher un flux vidéo issu d'une caméra instantanément sur un écran, les images de ce flux ayant subi un traitement dans un temps suffisamment court pour ne pas être perçu par l'œil humain.

L'invention concerne également un procédé de réalité augmentée destinée à être utilisé par un individu portant un dispositif portable sur le visage, comprenant les étapes suivantes :

- acquisition en temps réel d'une vidéo de l'individu portant le dispositif portable sur le visage ;
- affichage en temps réel de la vidéo dans laquelle l'aspect du dispositif portable est totalement ou en partie modifié par le procédé de génération d'une image.

Ainsi, grâce au procédé de génération d'une image, l'individu peut se voir en direct sur un écran sans le dispositif portable sur son visage. Le dispositif portable comprend généralement une monture apte à être portée sur la tête. Le dispositif portable peut également comprendre au moins un verre et/ou au moins un écran. Dans le cas d'un dispositif portable comprenant seulement une monture, la monture peut avantageusement être configurée pour éviter de couvrir les yeux et les sourcils. Il convient de souligner que le dispositif portable peut être un dispositif de vision. Ce procédé de réalité augmentée permet notamment à un individu devant porter une paire de lunettes correctives de se voir sur l'écran avec la même paire de lunettes mais avec une couleur et/ou une texture différente.

Avantageusement, le dispositif portable est totalement ou en partie occulté de la vidéo affiché en temps réel.

Ainsi, l'individu devant porter une paire de lunettes correctives se voit à l'écran sans sa paire de lunettes tout en la portant réellement sur le nez.

Dans un mode de mise en œuvre particulier de l'invention, le dispositif portable est un dispositif de vision comprenant une monture et des verres correctifs adaptés à la vision de l'individu portant le dispositif portable sur son visage.

En d'autres termes, le dispositif portable porté par l'individu comprend des verres correctifs adaptés à la vue de l'individu.

Dans un mode de mise en œuvre particulier de l'invention, l'individu portant le dispositif portable essaye un objet virtuel se superposant au moins partiellement dans la vidéo sur le dispositif portable partiellement ou totalement occulté.

Ainsi, un utilisateur portant une paire de lunettes correctives peut essayer virtuellement une nouvelle paire de lunettes tout en conservant sa paire de lunettes correctives lui permettant de garder son confort visuel.

Dans un mode de réalisation particulier de l'invention, le procédé de réalité augmentée comprend une étape d'initialisation du modèle du visage de l'individu à partir d'au moins une image de l'individu ne portant pas le dispositif portable sur le visage.

Ainsi, l'individu retire préalablement son dispositif portable de son visage pour la génération du modèle du visage, et le remet au bout d'un temps donné. L'acquisition de l'image de l'individu peut s'effectuer avec un ou plusieurs dispositifs d'acquisition d'images. L'individu peut effectuer des mouvements de sa tête afin que la génération du modèle du visage s'effectue à partir d'une pluralité d'images du visage acquises sous différents angles de vue.

Dans un mode de réalisation particulier de l'invention, le procédé de réalité augmentée comprend une étape d'initialisation du modèle du visage de l'individu à partir d'une pluralité d'images de l'individu portant le dispositif de vision, les images correspondant à des angles de vues différents du visage.

Ainsi, la génération du modèle du visage est effectuée sans que l'utilisateur ait besoin de retirer son dispositif portable du visage.

Dans un mode de mise en œuvre particulier de l'invention, le procédé de réalité augmentée comprend une étape d'initialisation du modèle du dispositif portable à partir d'au moins une image dudit dispositif acquise dans un dispositif de modélisation dédié.

Dans un autre mode de mise en œuvre particulier de l'invention, le procédé de réalité augmentée comprend une étape d'initialisation du modèle de dispositif portable à partir d'au moins une image de l'individu portant le dispositif portable.

L'invention concerne également un dispositif de réalité augmentée permettant l'essayage d'un objet virtuel par un individu portant un dispositif de vision, l'objet virtuel couvrant au moins partiellement le dispositif de vision, le dispositif d'essayage comprenant :

- au moins une caméra acquérant une vidéo de l'individu ;
- une unité de traitement de la vidéo acquise, l'unité de traitement occultant au moins partiellement sur la majorité ou la totalité des images de la vidéo le dispositif de vision par l'intermédiaire d'un procédé de génération d'une image ;
- au moins un écran affichant la vidéo traitée de l'individu.

Dans un mode de réalisation particulier de l'invention, l'écran est vertical et la caméra est fixée sensiblement dans le plan de l'écran.

Ainsi, cette configuration particulière permet à un individu se tenant assis ou debout face à la caméra de se voir en direct sur l'écran, comme dans un miroir.

Dans un mode de réalisation particulier de l'invention, le dispositif d'essayage d'un objet virtuel comprend deux caméras espacées, parallèlement à un bord de l'écran, d'une distance comprise entre trente et cinquante centimètres.

Ainsi, l'individu étant généralement placé à une distance comprise entre quatre-vingt centimètres et un mètre de l'écran afin de pouvoir toucher l'écran, la distance entre les caméras est optimale pour obtenir deux prises de vues du visage permettant de reconstruire le modèle et la texture du visage de manière réaliste.

Dans un mode de réalisation particulier de l'invention, le dispositif d'essayage d'un objet virtuel comprend en outre une troisième caméra sensiblement sur l'axe médian entre les deux premières caméras.

Ainsi, la troisième caméra permet d'obtenir une image de face de l'individu, cette image s'affichant à l'écran. Les deux premières caméras permettent d'améliorer la modélisation réaliste du visage et de la paire de lunettes portée par l'utilisateur.

Dans un mode de réalisation particulier de l'invention, l'écran est tactile.

Ainsi, l'utilisateur peut sélectionner l'objet virtuel à essayer. L'objet virtuel peut être un dispositif de vision comme une paire de lunettes de vue ou solaire, un accessoire pour le visage voire un maquillage.

Dans un mode de réalisation particulier de l'invention, l'affichage de la vidéo acquise et modifiée est effectué en temps réel.

En d'autres termes, le dispositif est un dispositif de réalité augmentée où l'utilisateur peut essayer un objet virtuel et se voir en temps réel sur l'écran.

Dans un mode de réalisation particulier de l'invention, le dispositif d'essayage d'un objet virtuel comprend un dispositif d'acquisition du modèle tridimensionnel du dispositif de vision.

## BREVE DESCRIPTION DES FIGURES

D'autres avantages, buts et caractéristiques particulières de la présente invention ressortiront de la description non limitative qui suit d'au moins un mode de réalisation particulier des procédés et dispositifs objets de la présente invention, en regard des dessins annexés, dans lesquels :

- la figure 1 représente un mode de réalisation d'un dispositif de réalité augmentée permettant l'essayage d'un objet virtuel par un individu portant un dispositif de vision réel ;
- la figure 2 représente un schéma de principe d'un mode de réalisation d'un procédé de génération d'une image finale à partir d'une image initiale ;
- la figure 3 représente sous la forme d'un schéma synoptique les étapes du procédé de génération d'une image en référence à la figure 2 ;
- la figure 4 illustre le modèle des yeux sous la forme de cinq vues :

  ○ 4a : une vue en perspective du modèle des yeux ;
  ○ 4b : une vue de côté d'un modèle de globe oculaire ;
  ○ 4c : une vue de face d'un modèle d'œil ;
  ○ 4d : une vue de côté d'un modèle de globe oculaire comprenant les courbes de paupières ;
  ○ 4e : une vue de face d'un modèle d'œil illustrant le déplacement de l'iris ;

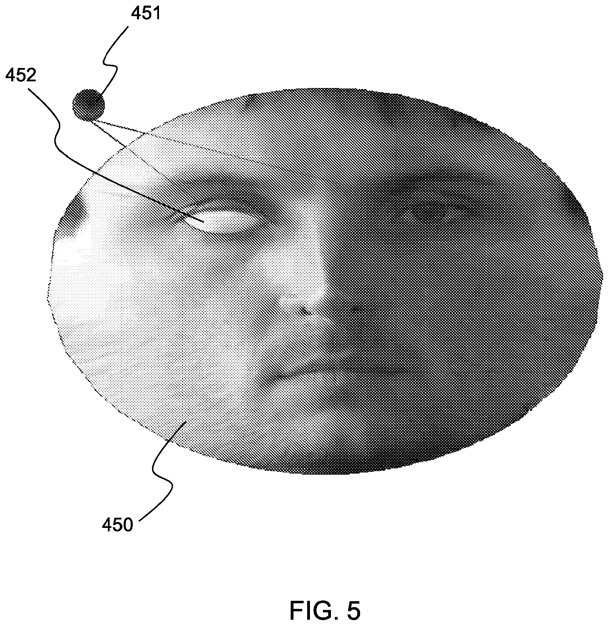

- la figure 5 illustre un exemple de texture acquise d'un visage réel ;

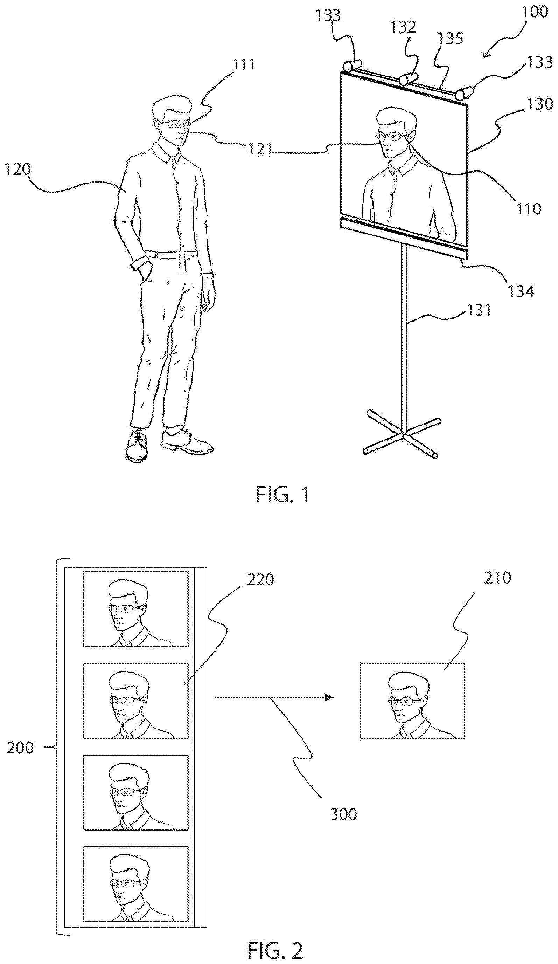

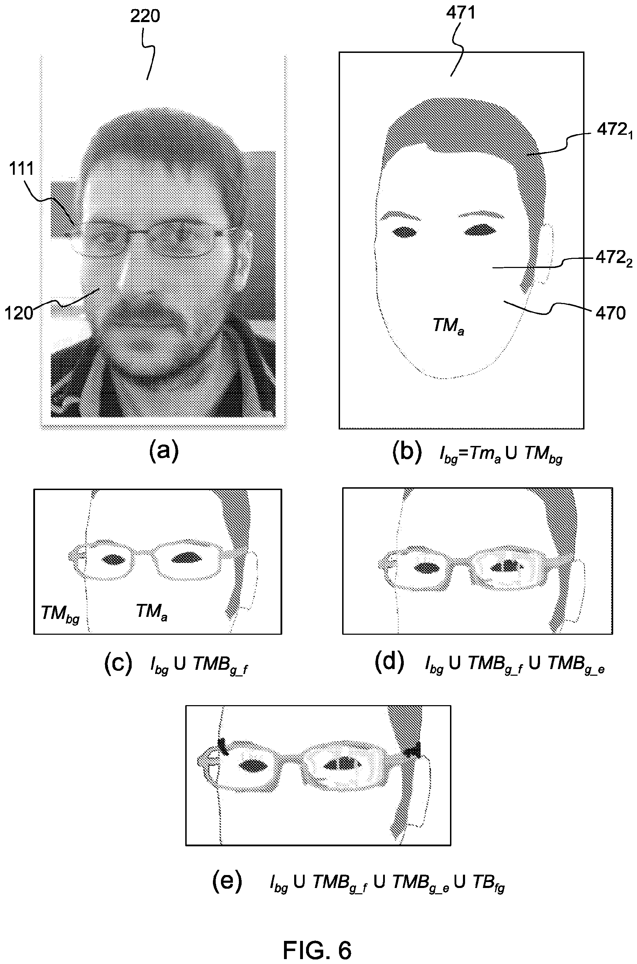

- la figure 6 illustre les masques générés au cours du procédé de génération d'une image en référence à la figure 2 ;

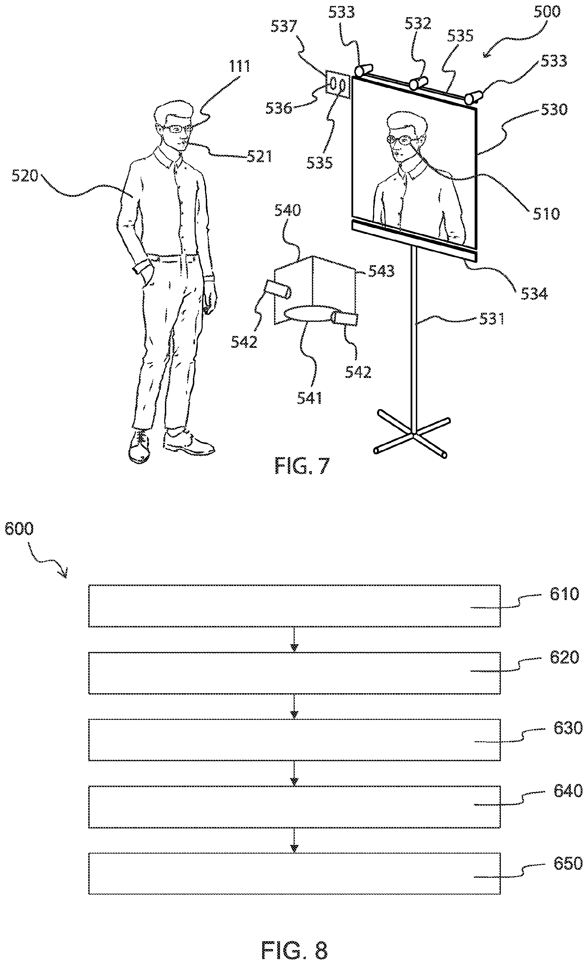

- la figure 7 représente un autre mode de réalisation d'un dispositif de réalité augmentée permettant l'essayage d'un objet virtuel par un individu portant un dispositif de vision réel ;
- la figure 8 représente sous la forme d'un schéma synoptique un autre mode de réalisation d'un procédé de génération d'une image finale à partir d'une image initial

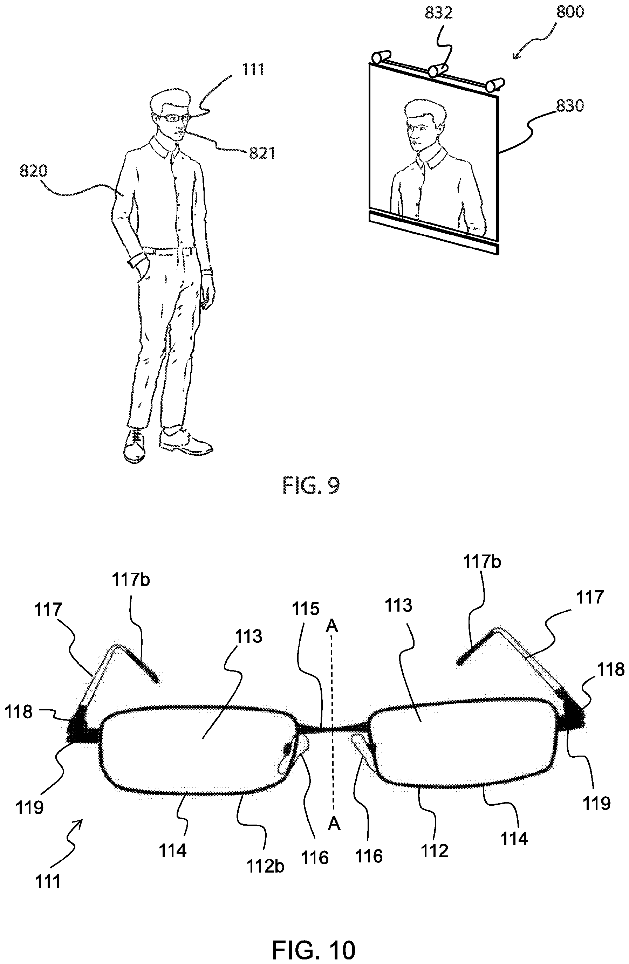

- la figure 9 représente un autre mode de réalisation d'un dispositif de réalité augmentée utilisée par un individu portant un dispositif de vision réel ;
- la figure 10 représente une paire de lunettes utilisée dans les exemples de mode de réalisation de l'invention ;

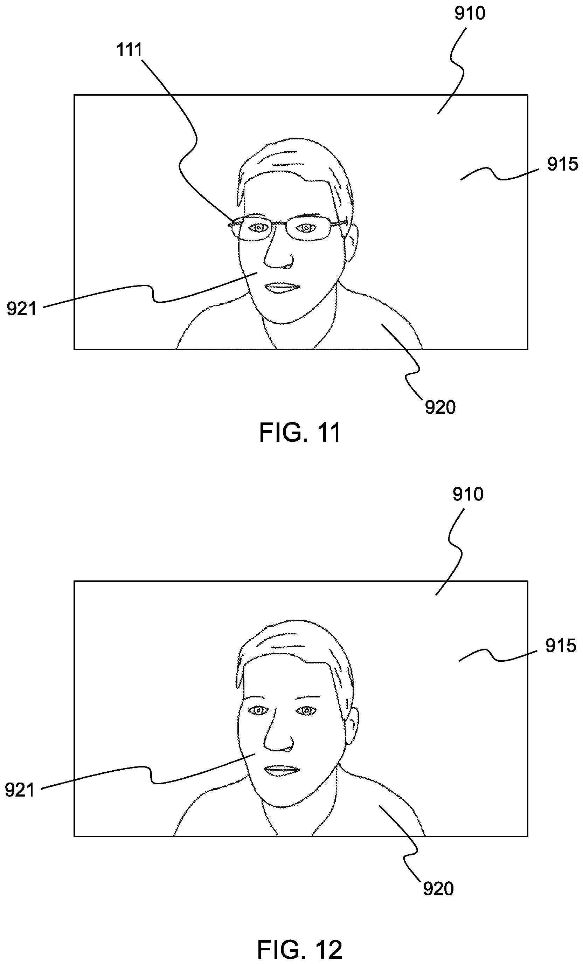

- la figure 11 représente un écran affichant une vidéo d'un individu portant un paire de lunettes sur le visage ;
- la figure 12 représente un écran affichant la vidéo en référence à la figure 11 dans laquelle la paire de lunettes est occultée.

## DESCRIPTION DETAILLEE DE MODES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

### Description liminaire aux exemples de mode de réalisation de l'invention

La figure 10 représente une paire de lunettes 111 comprenant une monture 112 rigide et deux verres correctifs 113 assemblés à la monture 112. La monture 112 symétrique par rapport au plan médian AA comprend une face 112b et deux branches 117 s'étendant latéralement de part et d'autre de la face 112b.

La face 112b comprend deux cercles 114 entourant les verres 113, un pont 115 assurant l'écartement entre les cercles 114 ainsi que deux tenons 119. Deux plaquettes 116 fixées chacune à un cercle 114 sont destinées à reposer de part et d'autre d'un nez d'un individu.

Les deux branches 117 sont fixées chacun à un tenon 119 de la face 112b par l'intermédiaire de charnières 118 permettant ainsi à la monture 112 d'être articulée. En position ouverte de la monture 112, la face 112b est inclinée d'un angle compris entre 5° et 10° par rapport au plan perpendiculaireau plan formé par les axes des branches 117. Cet angle se confond généralement avec l'angle pantoscopique de la paire de lunettes 111, c'est-à-dire à l'angle de la face 112b avec la verticale lorsque la paire de lunettes 111 est placée sur le nez d'un individu regardant au loin sans incliner la tête, le plan des branches étant horizontal. Chaque branche 117 se termine par un manchon 117b destiné à reposer sur une oreille d'un individu. La monture 112 s'étend ainsi latéralement de part et d'autre du visage d'un individu portant la paire de lunettes 111.

Il convient de souligner que la paire de lunettes 111 utilisée dans les deux exemples suivants de mode de réalisation de l'invention, est un exemple non limitatif d'objet réel effacé d'une image ou d'une séquence d'images par le procédé objet de l'invention.

### Exemple d'un mode de réalisation particulier de l'invention

La figure 1 représente un dispositif 100 d'essayage d'un objet virtuel 110 par un individu 120 portant la paire de lunettes 111 sur le visage.

Il convient de souligner que dans le présent exemple non limitatif de l'invention, l'individu 120 est moyennement myope. Ainsi, la visibilité de l'individu 120 ne portant pas de paire de lunettes correctives est d'environ vingt centimètres.

Le dispositif 100 comprend un écran tactile 130 fixé verticalement sur un support 131, une caméra 132 centrée au-dessus de l'écran 130, deux caméras périphériques 133 et une unité de traitement 134.

Dans une variante de ce mode de réalisation, le dispositif 100 comprend en outre un capteur de profondeur mesurant par infrarouge la distance des éléments par rapport à la caméra. Le capteur de profondeur peut comprendre un projecteur à infrarouge et un capteur photosensible dans la longueur d'onde de l'infrarouge. Le capteur photosensible étant à proximité immédiate du projecteur, la densité des points de l'image permet d'en déduire une carte de profondeur indiquant la distance de chaque point de l'image par rapport au capteur.

Dans une autre variante de ce mode de réalisation particulier de l'invention, le dispositif 100 comprend également un scanner ou un double capteur permettant d'acquérir un modèle de la totalité du visage de l'individu 120.

Lorsque l'individu 120 se tient face à l'écran 130, l'individu 120 voit l'image de son visage 121 de face, acquise en temps réel par la caméra 132. Afin de pouvoir toucher l'écran tactile 130, l'individu 120 se tient debout à une distance d'environ un bras de l'écran 130. La distance entre l'individu 120 et l'écran tactile 130 est comprise entre soixante et cent-vingt centimètres. L'individu 120 porte la paire de lunettes 111 afin de voir l'écran 130 de manière nette.

Les deux caméras périphériques 133 sont fixées sur un rail parallèle 135 au bord supérieur de l'écran 130, symétriquement de part et d'autre de la caméra 132. La distance entre les deux caméras périphériques 133 est comprise entre trente et cinquante centimètres. Dans le présent exemple, les deux caméras 133 sont espacées de quarante centimètres l'une de l'autre, ce qui permet d'obtenir des images du visage 121 de l'individu 120 avec un angle de vue décalé d'environ 20° par rapport à la normale.

L'unité de traitement 134 génère à partir de chaque image initiale de la séquence acquise par la caméra 132 une image finale du visage 121 de l'individu 120 dans laquelle la paire de lunettes 111 est occultée. En d'autres termes, la paire de lunettes 111 est rendue invisible sur l'affichage en temps réel du visage 121 à l'écran 130.

A cet effet, une représentation virtuelle de la scène acquise par la caméra 132 est créée. Cette représentation virtuelle comprend un modèle tridimensionnel de la paire de lunettes 111 positionné sur une représentation de l'environnement comprenant un modèle du visage de l'individu 120. La projection du modèle de la paire de lunettes 111 et de la représentation de l'environnement permet de créer un masque se superposant sur la paire de lunettes réelle sur chaque image de la séquence acquise par la caméra 132.

Il convient de noter que pour la représentation virtuelle, une caméra virtuelle remplace la caméra 132 en ayant le même angle de vue et le même grandissement. En d'autres termes, les caractéristiques optiques de la caméra virtuelle sont identiques à ceux de la caméra 132.

Comme illustré en figure 2, l'unité de traitement 134 génère ainsi une nouvelle image 210 à partir de chaque image 220 de la séquence 200 acquise par la caméra 132 selon un procédé de génération 300 d'une image.

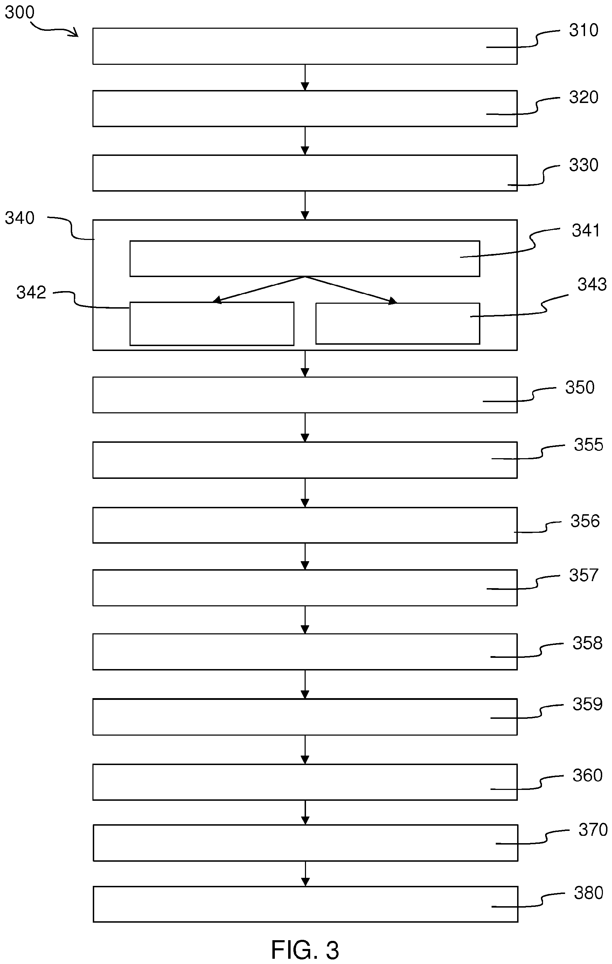

La figure 3 représente sous la forme d'un schéma synoptique le procédé de génération 300.

Dans une première **étape 310**, le procédé de génération 300 détecte la présence de la paire de lunettes 111 dans l'image initiale 220.

Le procédé de génération 300 détermine dans une deuxième **étape 320** l'orientation de la paire de lunettes 111 par rapport à la caméra 132.

Le procédé de génération 300 détermine dans une **étape 330** une dimension caractéristique de la paire de lunettes 111 sur l'image initiale 220. La dimension caractéristique est dans le présent exemple non limitatif de l'invention, égale à la largeur de la monture 112.

Le procédé de génération 300 élabore dans une **étape 340** un modèle tridimensionnel de la paire de lunettes 111 dans un espace virtuel représentant l'espace réel acquis par la caméra 132.

L'étape 340 d'élaboration du modèle de la paire de lunettes 111 comprend une première sous-étape 341 d'identification de la paire de lunettes 111 parmi les paires de lunettes préalablement modélisées et stockées dans une base de données reliée à l'unité de traitement 134. Cette identification peut être faite par la connaissance de la référence de la lunette et des éléments dits de framemarking imprimés sur cette dernière.

L'identification de la paire de lunettes 111 peut également être effectuée par une reconnaissance automatique à partir d'images de la paire de lunette portée par l'utilisateur ou dans un dispositif dédié à l'acquisition d'images de la paire de lunettes seule, comme par exemple une boite de lumière. A cet effet, l'identification automatique utilise des méthodes d'indexation et de reconnaissance visuelle d'apparence d'objets 3D bien connues de l'homme du métier, en générant par exemple des courbes de support venant s'ajuster sur les contours de la paire de lunettes 111.

Il convient de souligner que la reconnaissance visuelle de la paire de lunettes peut être effectué à partir des critères de :

- forme de la paire de lunettes ;
- couleur(s) de la paire de lunettes ;
- texture de la paire de lunettes ;
- présence d'une caractéristique notable de la paire de lunette ou d'un logo.

Dans le cas où la sous-étape 341 aboutit à un résultat positif où la paire de lunettes est identifiée, le modèle de la paire de lunettes 111 est extrait de la base de données au cours d'une sous-étape 342.

Dans le cas contraire où aucune paire de lunettes de la base de données ne correspond à la paire de lunettes 111, le modèle 3D de la paire de lunettes 111 est élaboré, au cours d'une sous-étape 343, à partir d'images de la séquence 200 acquises par la caméra 132, et éventuellement à partir des paramètres représentant le modèle le plus proche en forme déterminés lors de l'étape de recherche dans la base

Il convient de souligner que les images de la séquence 200 présentent l'individu 120 portant la paire de lunettes 111 sur le visage. L'élaboration du modèle de la paire de lunettes 111 est ainsi effectuée en temps réel à partir des images acquises par la caméra centrale 132 et par les caméras périphériques 133. Lorsque la tête de l'individu 120 s'incline et/ou tourne, les caméras acquièrent des images sous un nouvel angle de vue. Le modèle de la paire de lunettes 111 est mis à jour à chaque image, notamment lorsque l'image présente une vue de l'individu 120 sous un angle différent.

Le modèle de paire de lunettes 111 élaboré au cours de la sous-étape 343 est construit en créant dans un premier temps un modèle de forme de la face 112b de la paire de lunettes 111 et un modèle des branches 117 de la paire de lunettes 111. Il convient de souligner que dans le cas où la paire de lunettes n'est pas symétrique, un modèle pour chaque branche est créé.

Dans une variante de ce mode de réalisation particulier de l'invention, le modèle de forme de la face 112b inclut également les plaquettes 116.

Afin d'élaborer le modèle de la face 112b de la paire de lunettes 111 et le modèle des branches 117, un squelette de la paire de lunettes est utilisé. Le squelette est extrait d'une base de données regroupant des topologies types de paires de lunettes. Les topologies types de paires de lunettes permettent de classer les paires de lunettes selon les formes des lunettes. Les topologies sont définies par :

- un type de cercle : cercle entier, demi-cercle supérieur, demi-cercle inférieur, absence de cercle ;
- une forme de cercle : rond, ovale, rectangulaire ;
- une forme de tenons ;
- un pont ou une barre reliant les deux verres, la branche et/ou la barre pouvant être simple ou multiple ;
- deux branches ;
- la connaissance de parties différenciées de chacun des éléments ci-dessus, comme par exemple la présence d'un trou dans une branche, une dissymétrie entre les cercles, une excroissance sur la monture...

L'épaisseur est déterminée autour du squelette de la paire de lunettes en générant une enveloppe 3D fermée qui englobe la paire de lunettes 111.

La génération de l'enveloppe 3D s'effectue en trois sous-étapes suivantes :

- création de courbes de support dans les plans perpendiculaires au squelette. Ces courbes de support correspondent sensiblement aux coupes de la monture 112 ;
- génération d'une enveloppe 3D en contact des courbes de support ;
- création d'un maillage à l'intérieur de l'enveloppe 3D.

Il convient de souligner que les courbes de support permettant de générer l'enveloppe 3D sont issues de connaissances a priori, dessinées manuellement ou apprises statistiquement. L'initialisation des courbes de support est généralement effectuée lors de l'étape de reconnaissance visuelle pour tenter d'identifier automatiquement la paire de lunettes 111. Les courbes de support sont générées à partir des images de la paire de lunettes 111 portées sur le visage ou à partir d'images de la paire de lunettes 111 acquises sur un fond neutre par un dispositif de modélisation dédiée (non représenté sur la figure 1).

Après la génération du modèle de la paire de lunettes 111 à partir des images de l'individu 120 portant la paire de lunettes 111 sur le visage, le modèle de la paire de lunettes 111 est ensuite recalé de manière identique à la paire de lunettes 111 réelle, au cours de **l'étape 350.** Le modèle de la paire de lunettes 111 a ainsi la même orientation par rapport à la caméra 132 et la même dimension caractéristique à l'image que la paire de lunettes 111 réelle. En d'autres termes, le modèle de la paire de lunettes 111 est positionné dans l'espace virtuel, orienté selon la position de la caméra virtuelle et configuré selon la dimension de la paire de lunettes 111 réelle. Un facteur de grossissement peut ainsi être appliqué au modèle de la paire de lunettes 111. Les paramètres de pose du modèle de la paire de lunettes 111 sont notés $Pe_{Mg}$.

Au cours de **l'étape 355**, le procédé de génération élabore un modèle géométrique $M_a$ en trois dimensions d'un avatar représentant le visage sans la paire de lunettes 111. Une texture $T_{aNG}$ du visage sans la paire de lunettes 111 est également créée au cours de l'étape 355. Le modèle géométrique $M_a$ est paramétré en morphologie et expressions selon le procédé d'élaboration du modèle du visage décrit en suivant.

Le procédé d'élaboration de l'avatar comprend une première étape de détection du visage dans l'image et d'analyse faciale du visage détecté. La détection du visage est effectuée dans le présent exemple non limitatif de l'invention par une méthode de Viola-Jones, comme explicité dans le brevet FR2955409.

Un algorithme d'alignement de traits est ensuite utilisé pour trouver des traits spécifiques du visage, lors d'une deuxième sous-étape du procédé d'élaboration du visage. A cet effet, un détecteur de traits bien connu de l'homme du métier est utilisé et permet de trouver de manière très fiable des traits internes du visage.

L'algorithme d'alignement de traits HPAAM, décrit dans la demande de brevet européen EP2678804, permet ensuite de localiser avec précision la projection de traits 3D significatifs sur l'image. Contrairement aux techniques existantes qui donnent lieu à une erreur de localisation dans des environnements encombrés, HPAAM est particulièrement stable sur des traits situés sur le contour du visage, tels que des points des oreilles. Etant donné que l'algorithme HPAAM est une technique faisant appel à une phase d'apprentissage, l'utilisation de points prédéterminés possédant une correspondance 3D a un impact sur la réussite de la technique d'analyse faciale globale, notamment en ce qui concerne la robustesse et l'efficacité de la technique. Généralement, cette relation est spécifiée pour un petit nombre de points dans les techniques d'analyse faciale 3D, comme les points de départ d'une stratégie d'ajustement 3DMM, dans laquelle cinq points sont définis manuellement.

Il convient de souligner que cette étape de détection du visage est robuste aux occultations du visage constituées par la paire de lunettes 111.

La deuxième étape du procédé d'élaboration de l'avatar concerne l'estimation des paramètres du modèle du visage $\theta_{model}$ comprenant :

- les paramètres extrinsèques $Pe_{Ma}$ du modèle de visage, c'est-à-dire les paramètres de pose du visage, dont la position et l'orientation du visage ;
- les paramètres intrinsèques $Pi_{Ma}$ du visage, c'est-à-dire la morphologie 3D du visage ; et éventuellement
- les modèles d'expression du visage, et les paramètres extrinsèques (translation $T_{SE}$) et de configuration des yeux, qui seront réestimés à chaque image lors du tracking.

Les paramètres du modèle de visage $\theta_{model}$ sont estimés en utilisant un modèle géométrique statistique de la morphologie du visage humain. A cet effet, une base de données de visages est utilisée, comme par exemple la base de données décrite dans le document de Blanz et Vetter publié en 2003, intitulé « Face Recognition Based on Fitting a 3D Morphable Model ».

Une estimation des paramètres du modèle de visage $\theta_{model}$ et des paramètres $\theta_{cam}$ de la caméra virtuelle est effectuée en utilisant les traits trouvés au stade de détection des traits et en ajustant dynamiquement des contours dans l'image.

Afin d'estimer les paramètres intrinsèques et extrinsèques $\theta_{cam}$ de la caméra et les paramètres du modèle de visage $\theta_{model}$, une minimisation à la fois de la distance entre les traits du visage trouvés dans l'image $f_{i,i=1..n}$ et la projection des points sémantiques 3D définis sur le visage paramétrique $Proj(X_{s(i)})$, et de la distance entre la projection des contours de visage paramétriques et les bords d'image associés est effectuée.

La fonction $Proj(X)$ représente la transformation projective d'une scène 3D, comme par exemple le visage ou la paire de lunettes, vers un calque ou plan image, en considérant un modèle de caméra de type pinhole, bien connue de l'homme du métier, qui permet d'effectuer une division perspective. Ainsi, la fonction $Proj(X)$ permet de passer du point 3D $X$ = (x,y,z) de l'espace euclidien de la scène au point $(u,v)$ du calque, en tenant compte des paramètres intrinsèques de caméra contenus dans la matrice K et de la transformation rigide de la forme $RX + T$, avec $R$ matrice de rotation 3x3 et $T$ translation 3x1. Lorsque nécessaire, on notera cette projection $Proj(X ; K, R, T)$. Il convient de souligner que la projection des contours de visage paramétriques correspondent à la projection de points du modèle de visage dont la normale est orthogonale à leur direction d'observation.

Dans ce but, un échantillonnage de la direction orthogonale aux contours du point échantillon courant est effectué et permet d'échantillonner les contours pour plusieurs raisons : efficacité numérique, stabilité et compatibilité avec d'autres techniques d'alignement utilisées dans la poursuite d'objets 3D. A cet effet, pour chaque itération de la minimisation, un calcul de $C(\theta_{cam}, \theta_{model})$ qui contient un sous-ensemble de points du modèle de visage $X_j$ avec la normale $n_j$ orthogonale à la projection axiale et des points associés du contour de l'image $cont_j = ProjContour(X_j,n_j)$ est effectué, où $ProjContour$ est une fonction projetant le point $X_j$ et recherchant, le long de la projection normale, le meilleur contour parmi de multiples hypothèses. Ces hypothèses sont calculées localement étant donné que les bords sont calculés le long de la direction normale et respectent l'amplitude du signal, ce qui conduit à une détection de bords précise et invariante selon l'échelle pour l'ensemble de l'objet-visage. Cette méthode sera appelée par la suite méthode des normales.

La fonction de coût peut être par exemple mise en œuvre en utilisant une approche du type estimateur M telle que celle qui utilise la fonction de poids robuste de Tukey. En variante, un calcul du résidu pour le point le plus proche le long de la direction normale du contour parmi de multiples hypothèses peut être effectué.

Au final, l'équation à résoudre s'écrit :

$$\underset{\theta_{cam},\theta_{model}}{argmin} \left( \gamma \sum_{i=1..n} \left\| f_i, Proj(X_{s(i)}) \right\|_2 + (1-\gamma) \sum_{X_j \in C(\theta_{cam},\theta_{model})} \left\| Proj(X_j), cont_j \right\|_2 \right) \qquad (1)$$

où $\|.,.\|_2$ représente la distance Euclidienne et $\gamma$ est un paramètre permettant de donner plus d'importance à l'une des deux parties de la fonction de coût : soit les contours ou soit les traits. Cette équation peut être résolue en utilisant des techniques classiques de descente du gradient bien connues de l'homme du métier.

L'avantage principal de cette technique d'estimation est que lorsque de multiples images sont disponibles, comme ici dans la séquence 200 d'images, elle s'étend à un algorithme d'analyse multi-images qui assouplit la contrainte de correspondance sémantique 2D/3D et permet d'affiner tous les paramètres estimés. Elle peut être utilisée pour rechercher la morphologie du meilleur ajustement pour toutes les images.

Il convient de souligner que lorsqu'un scan du visage est effectué en 3D, produisant notamment des données 3D, par exemple grâce à un capteur infrarouge ou à une caméra de profondeur de type RGB-D (acronyme anglais de « *Red-Green-Blue-Depth* »), une contrainte 3D/3D est ajoutée. Ainsi, pour chaque point du modèle de visage $X_i$, on cherche à minimiser la distance entre le point du modèle de visage $X_i$ et le point 3D le plus proche dans les données scannées $X_{p(i)}^{scan}$. On peut ainsi ajouter dans l'équation (1) de minimisation le terme suivant :

$$\sum_{i=1..n} \left\| X_i, X_{p(i)}^{scan} \right\|_2$$

La troisième étape du procédé d'élaboration de l'avatar concerne l'ajout des expressions 3D du visage.

Les expressions ajoutent une certaine variabilité au modèle de visage et leur exclusion permet une estimation plus stable et précise des paramètres de pose et de morphologie du visage.

Une approche habituellement utilisée pour créer des variations paramétriques d'un maillage consiste à utiliser des formes de mélange, c'est-à-dire un ensemble de modèles géométriques combinés linéairement afin de produire des instances uniques. Une technique couramment utilisée pour calculer ces formes de mélange consiste à les déduire statistiquement comme décrit dans [A 3D Face Model for Pose and Illumination Invariant Face Récognition, Paysan et al., 2009].

Le modèle présente la forme suivante :

$$g(\alpha) = g_m + \alpha \times V,$$

où $g(\alpha)$ est un vecteur représentant une nouvelle forme et s'écrit $g(\alpha) = (x_1, y_1, z_1, ..., x_n, y_n, z_n)^T$, *avec* $(x_i, y_i, z_i)$, est le i$^{\text{ème}}$ sommet, $g_m$ est la forme 3D moyenne, $\alpha$ est un vecteur qui contient des paramètres d'adaptation propres à l'utilisateur et $V$ est une matrice qui contient la base de Formes Statistiques. De manière générale, les bases de Formes Statistiques ne comprennent que les variations d'identité, sans tenir compte des variations d'expression, de manière à garantir une bonne aptitude à la séparation des paramètres de commande.

Néanmoins des expressions sont avantageusement ajoutées au modèle pour le calcul en temps réel.

Le modèle 3D est un modèle fil de fer qui peut être déformé conformément à $g(\alpha,\beta) = gm + \alpha V + \beta A$, où $\beta$ est un vecteur qui contient les paramètres d'animation, et A est une matrice qui contient les Unités d'Animation. Comme indiqué dans [CANDIDE-3 - An Updated Parameterised Face, Ahlberg, technical report, 2001], la matrice d'Unités d'Animation permet de faire en sorte que les points poursuivis en 3D représentent des variations d'expression.

Non seulement cette séparation des paramètres est plus puissante que la modélisation classique, mais elle simplifie également le calcul en temps réel. Au lieu de faire en sorte que tous les paramètres de pose 3D, d'identité du visage et d'expression modifient chaque monture au cours du processus de poursuite, les paramètres d'identité invariants sont fournis à partir du stade d'analyse faciale. Seuls les paramètres de pose 3D et un petit nombre de paramètres de variation d'expressions sont estimés pour chaque image.

L'estimation complète des paramètres du modèle de forme déformable et de pose s'effectue sur la base de la résolution de :

$$\min_{R,T,\beta} \left\| Proj(g(\alpha,\beta); \mathrm{K}, \mathrm{R}, \mathrm{T}) - p2D \right\|_2$$

où $R$ est la matrice de rotation 3D, $T$ est la translation 3D, $K$ est la matrice de paramètres de caméra intrinsèques, $\alpha$ est fixé lors du stade d'analyse faciale, $p2D$ est la position courante dans l'image du point poursuivi en 3D.

Le modèle du visage comprend un modèle des yeux relié par une translation rigide $T_{SE}$ entre le repère du modèle du visage et le repère du modèle des yeux.

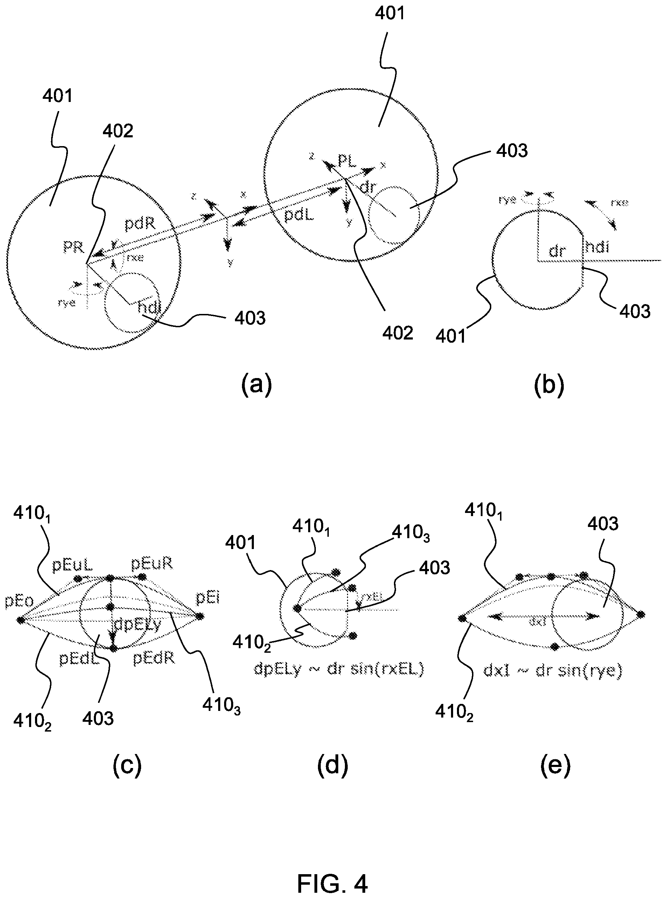

Comme illustré en figure 4, les deux yeux 401 sont représentés par deux centres de rotation 402, noté $PS$ où $S \in \{R,L\}$ correspond soit au côté droit ($S = R$ pour l'anglais « *Right* ») soit au côté gauche ($S = L$ pour l'anglais « *Left* »). Les deux centres de rotation 402 sont reliés au repère du système des yeux $SE,$ par une distance $pdS, S \in \{R,L\}$. Chaque œil 401 est orienté par rapport au repère du système des yeux par des angles $rxe, ryeS, S \in \{R,L\}$, rotations respectives autour des axes x et y. Les centres de rotation 402 sont à une distance $dr$ du centre d'un disque 403 de rayon $hdi$ représentant l'iris. Le disque 403 est compris dans un élément composé de trois courbes de Bézier 410 d'ordre 3 ayant les mêmes points de contrôle de début et de fin, $pEo, pEi$, comme représenté sur la figure 4c. Les courbes des bords des yeux peuvent être représentées en 3D sur le maillage du visage. Il est important que les points $pEo, pEi$ soient à l'intersection des courbes des bords des yeux, et que la courbe qui se déplace soit paramétrée par un paramètre $dpELv$

permettant à la courbe paupière $410_3$ d'évoluer entre les valeurs de la courbe haute $410_1$ et la courbe basse $410_2$. Ce paramètre unidimensionnel peut influer sur le parcours 3D de la courbe $410_3$ de la paupière selon une courbe définie dans l'espace.

Il convient de souligner que les courbes $410_1$ et $410_2$ sont contrôlées par des points de contrôle comprenant respectivement les points *pEuL* et *pEuR*, et les points *pEdL* et *pEdR*.

Le parcours 3D de la courbe $410_3$ de la paupière peut être représenté dans les modes de déformation du modèle de morphologie paramétrable, en fonction du déplacement de la position de la paupière *dpELy(t)* donné par la rotation *rxEL* autour de l'axe *x* du repère particulier de l'œil, où t compris entre 0 et 1 permet de paramétriser la position d'un point sur la courbe paupière $410_3$.

Il convient de souligner que le point de la courbe paupière $410_3$ où t est égal à 0,5 correspond au point médian. En ce point, la position *dpELy(t = 0,5)* se déplace sensiblement sur le disque de rayon *dr*. On distingue les configurations de l'œil gauche et droit L et R de *dpELy*, ce qui permet de modéliser la fermeture d'une seule paupière, contrairement au paramètre de rotation verticale de l'œil *rxe* pour qui dans la grande majorité des cas les déplacements de l'œil gauche et droit sont les mêmes.

La relation $T_{SE}$ permet aux disques iris des yeux en rotation autour des points *PL* et *PR* de toucher les courbes des paupières.

A partir de l'image 220 où le visage est détecté, et pour une pose $Pe_{Ma0}$ et des paramètres intrinsèques de visage $Pi_{Ma0}$, les paramètres $T_{SE}$, *rxEL*, *rxe*, {*pdS*, *ryeS*}; $S \in \{R,L\}$, sont estimés au moment de la pose du modèle sur le visage pour chaque image. Les paramètres de positionnement du système des yeux SE dans le repère du visage $T_{SE}$, ainsi que les paramètres de distance pupillaire pdR et pdL sont considérés comme appartenant à la morphologie de l'utilisateur et n'ont plus besoin d'être réestimés une fois qu'ils sont stables. On peut les résoudre par rapport à la reprojection du modèle dans une image, ou à partir d'un ensemble d'images acquises. La résolution des paramètres de distance pupillaire est décrite par exemple par le brevet FR 2971873.

La résolution de l'ensemble des paramètres $T_{SE}$, *rxEL*, *rxe*, {*pdS*, *ryeS*}; $S \in \{R,L\}$, s'appuie sur les éléments suivants, en considérant une ou plusieurs images acquises :

- dans le cas où l'on considère la différence entre la projection du modèle et l'image : par une méthode de descente de gradient qui minimise la différence de l'apparence synthétisée du visage avec l'image par l'intermédiaire d'une méthode de Lucas-Kanade;

- dans le cas où l'on considère un alignement des courbes iris $C_I$ et paupière sur l'image de contour : en minimisant les distances entre les contours. Pour résoudre cette minimisation des distances entre les contours, on considère les points homologues situés sur la normale au contour. Les courbes étant paramétriques, il est aisé de les échantillonner avec :

  • un paramètre d'angle $\theta, \theta \in [0, 2\pi[$ pour la courbe iris qui est un cercle ;
  • un paramètre d'évaluation $s, s \in [0,1]$ de la courbe pour la paupière qui est une courbe de Bézier d'ordre 3.

La différence entre les points échantillonnés $C_{I\theta i}$ et $C_{Esi}$ du modèle projeté à la pose $Pe_{Ma0}$ pour les paramètres intrinsèques $Pi_{Ma0}$, et l'image de contour $I_{C0}$ du visage obtenue avec des opérateurs classiques de type Canny ou Sobel est mesurée.

Il convient de souligner que la différence entre les points échantillonnés et l'image de contour peut également être déterminée par une recherche selon la méthode des normales précédemment décrite.

Il est aussi possible de résoudre les paramètres de pose en générant des cartes de distance du modèle de contour projeté, et de projeter les points contours de l'image dans cette carte pour la résolution.

Les deux types d'équation à résoudre sont :

a) équation correspondant à la différence image pour la résolution du système des yeux :

$$\underset{\{T_{SE}\ rxe, ryES, pdS, rxEL, hdi\}; S=\{R,L\}}{\arg\min} ||I(f_{projT} M_{a,SE}; K, Pe_{Ma0}, Pi_{Ma0}, dr) - I_0||^2$$

où *K* est la matrice des paramètres intrinsèques de la caméra, $I(f_{projT} M_{a,SE})$ est l'image générée par la projection du modèle avatar et du système des yeux avec prise en compte des occultations du système des yeux *SE* par la fermeture des paupières ou par les auto-occultations dues à la pose du modèle. La génération de l'image suppose une texture connue. On ajoute donc lors de l'initialisation une résolution sur des paramètres d'apprentissage qui font varier la texture de manière paramétrique, de type modèle actif d'apparence. Lors de la mise à jour, la texture spécifique de la scène sera utilisée. Il convient de souligner que la différence contour est avantageusement utilisée pour l'initialisation pour des raisons de performances et de simplicité des données.
b) équation différence contour pour la résolution du système des yeux

$$\underset{\{T_{SE},rxe,ryES,pdS,rxEL,hdi\};S=\{R,L\}}{\operatorname{argmin}} \sum_{\theta,s} ||Proj\,(C_{I\theta}C_{Es};K,Pe_{Ma0},Pi_{Ma0},dr) - p(I_{C0};\theta,s)\,||^2,$$

où l'ensemble des points de l'image $I_{C0}$ est sélectionné le long de la normale au gradient à la courbe considérée $C_I$ ou $C_E$ projetée, pour les points des courbes associés aux valeurs des paramètres $\theta$ et $s$.

Dans une variante de ce mode de réalisation particulier de l'invention, la fonction *ProjContour* est également utilisée pour la minimisation des yeux.

Il convient de noter qu'afin de rendre le système d'équations robustes en première initialisation, les valeurs par défaut suivantes sont utilisées :

- $hdi$ = 6.5$mm$, $dr$ = 10,5$mm$ pour l'initialisation,
- ainsi que la contrainte $pdR = pdL, ryeR = ryeL$.
- la valeur de la rotation $rxe_0$=0 pour une valeur moyenne statistique de rotation du visage de 0 degrés sur un ensemble d'apprentissage significatif. Cela permet de contraindre la résolution des paramètres du système des yeux.

Ces valeurs sont ensuite réestimées lors de la mise à jour des paramètres.

Dans le cas où l'on dispose de deux images calibrées ou de la carte de profondeur, il est possible de retrouver aisément l'ensemble des paramètres. Ces équations peuvent être couplées à la résolution des paramètres extrinsèques et intrinsèques du visage.

Dans le cas où une carte de profondeur est disponible en plus de l'image, l'estimation des paramètres extrinsèques et intrinsèques du visage est améliorée. En effet, ces valeurs sont utilisées pour parfaire l'estimation du modèle paramétrique. Si le modèle paramétrique ne correspond pas entièrement car le paramétrage ne permet pas d'expliquer la profondeur, le modèle de visage est adapté sur la surface, en résolvant le système décrit dans l'équation (1) de résolution 3D du visage. On dispose alors non pas d'une estimation des paramètres du visage mais d'un modèle métrologique paramétré du visage de l'utilisateur.

Une fois l'alignement réalisé entre le modèle du visage, le modèle des yeux et l'image 220, les textures du visage $T_{aNG}$ et de l'arrière-plan $T_{bg}$, définies plus en détails ci-dessous, sont mises à jour au cours de **l'étape 356** afin de correspondre à la réalité de la scène acquise par la caméra 132.

La texture $T_{aNG}$ 450, illustrée en figure 5, est un atlas du visage, calculé selon les méthodes de dépliage de maillage classiques bien connues de l'homme du métier. Une fois le visage 3D projeté dans l'image, les faces visibles et orientées vers la caméra, par exemple par des méthodes z-buffer ou culling, permettent de remplir l'image texture $T_{aNG}$ 450.

Les textures des yeux sont réparties sur la texture du visage et sont décomposées en trois parties : la texture de l'iris $T_{aNG\_I}$ 451, la texture du blanc de l'œil $Ta_{NG\_E}$ 452, la texture de la paupière $T_{aNG\_EL}$. Ces trois éléments peuvent être incomplets lors de l'acquisition mais peuvent être complétés de manière simple par interpolation pour $T_{aNG\_E}$ et $T_{aNG\_EL}$ pour les zones non connues à synthétiser ou par connaissance de la topologie pour les parties non visibles, comme le haut de l'iris si l'œil n'est pas grand ouvert. Le caractère circulaire de la pupille et de l'iris permet de compléter la texture selon un paramétrage polaire.

Une carte du fond $T_{bg}$, également appelée carte d'arrière-plan ou de background, est élaborée au cours de **l'étape 357.**

La carte $T_{bg}$ correspond au fond et à tout ce qui est considéré n'appartenant ni à la paire de lunettes réelle portée par l'utilisateur, ni au visage, ou tout autre élément modélisé explicitement, comme un modèle de cheveux ou une main venant se superposer au visage et à la paire de lunettes 111. La carte $T_{bg}$ est mise à jour de manière dynamique en suivant des règles de mise à jour telles que l'on trouve dans les techniques classiques de soustraction de fond (en anglais « *background subtraction* »). On se réfère à des modèles de couleur prédominante pour chacun des pixels, en utilisant des distributions de probabilités et des modes possibles pour les couleurs. Plusieurs modèles peuvent être employés, comme des mélanges de gaussiennes, ou des estimations de modes par méthodes de noyaux sur des histogrammes. Ce modèle est couplé à un modèle dynamique de mise à jour temporelle et possiblement spatial.

Par exemple, le modèle dynamique de mise à jour peut s'effectuer de la manière suivante : comme dans [Active Attentional Sampling for Speed-up of Background Substraction, Chang et al., 2012], pour chaque pixel, on prend en compte une propriété de temporalité $P_t$, une propriété de spatialité $P_s$ éliminant les pixels isolés et une propriété de fréquence sur les dernière images de la vidéo $P_f$ permettant d'éliminer les pixels changeant de classe trop souvent et pouvant être dû au bruit. Le produit de ces trois valeurs donne une probabilité pour chaque pixel d'appartenir à la carte et d'être mis à jour.

La carte de fond $T_{bg}$ est initialisée par tous les pixels non considérés comme le visage projeté ou la paire de lunettes projetée à cette étape. La carte de fond a les mêmes dimensions que l'image 220.

Par souci de performance, et grâce aux analyses complémentaires des modèles de suivi et d'analyse de points statistiquement aberrants, également appelés points outliers, la méthode de modification est utilisée. Cette méthode comprend les étapes durant lesquelles :

- A chaque nouvelle image $I$, une carte de segmentation du visage $T_a$ est calculée à partir de la projection du modèle de visage $M_a$ dans l'image. De la même façon, la projection du modèle de lunettes $M_g$ permet d'obtenir la carte de segmentation des lunettes $T_g$.
- Pour chacune de ces cartes, un pixel appartenant à la projection du modèle a une valeur de 1 alors que les autres pixels ont une valeur de 0. En restant dans le cas simple où il n'existe pas d'autres modèles, chaque pixel $p$ est traité de la manière suivante :

- Si $T_a(p) = 0$ et $T_g = 0$, $T_{bg}(p) = I(p)$,
- Sinon, la texture n'est pas modifiée.

Il est également possible de calculer une carte qui pour chaque pixel de $T_{bg}$, indique le nombre d'images acquises depuis la dernière actualisation du pixel, ce qui permet d'évaluer si un pixel a été modifié récemment ou non. Il est ainsi possible d'évaluer si la valeur d'un pixel est pertinente par rapport aux pixels situés à proximité, en fonction des temps respectifs de dernière mise à jour. Cette méthode de modification privilégie ainsi les pixels modifiés récemment.

Un modèle d'occultations par les éléments venant se superposer au visage 121, comme par exemple une main ou une mèche de cheveux, est élaboré au cours de **l'étape 358.**

La carte d'occultations est représentée par une texture dynamique $T_{fg}$ qui est mise à jour à chaque image de la séquence 200. On considère comme occultations toute perturbation des modèles d'apparence de la paire de lunettes 111 et du visage 121, ayant une consistance spatiale et temporelle, qui se distingue de la caractérisation de l'éclairage sur le visage 121, des ombres portées de la paire de lunettes 111 ou autoportées du visage (nez par exemple), ou des caustiques créées par la paire de lunettes 111 sur le visage 121. Le cas le plus probable est celui des cheveux ou d'une main.

La carte d'occultations est associée à un modèle géométrique $M_{fg}$ qui peut être variable. Cela peut être un plan qui représente une couche devant la scène 3D, ou une carte de profondeur estimée ou disponible.

La valeur de la carte d'occultations est déterminée par différence de la prédiction d'apparence avec l'image réelle, c'est-à-dire par différence entre la projection des modèles virtuels représentant le visage, la paire de lunettes et le fond et l'image réelle. En d'autres termes, la carte d'occultations comprend tous les éléments qui n'ont pas été modélisés auparavant.

Dans une variante de ce mode de réalisation particulier de l'invention, une technique d'inpainting est utilisée afin de combler d'éventuels espaces vides dans la carte d'occultations, permettant ainsi d'améliorer l'apparence de la carte d'occultations.

De même, pour des éléments petits, plus petits que la taille d'un pixel à l'image, comme par exemple une mèche fine de cheveux présente conjointement avec un élément du visage ou un élément de la paire de lunettes 111 sur un pixel, la carte d'occultations prend en compte des degrés d'opacité locale. Cette modification d'opacité est couramment utilisée pour résoudre des problèmes de digital matting. On nomme $T\alpha_{fg}$ le canal d'opacité en niveaux de gris de la carte d'occultations, et $TB_{fg}$ sa binarisation pour les pixels opaques de valeur 1.

Dans le cas de l'utilisation du capteur de profondeur, la détection des occultations est plus aisée et des méthodes bien connues de l'homme du métier peuvent être appliquées. Cependant, dans le cas présent où l'utilisateur porte des lunettes, les capteurs RGBD basés sur des technologies infrarouges obtiennent un très mauvais signal car les paires de lunettes sont des objets généralement constitués de matériaux complexes et à forte dynamique, comme le métal, le plastique translucide et le verre. Les effets de diffraction et réfraction de ces matériaux empêchent le système de création de la carte de profondeur de fonctionner correctement. D'autre part, la résolution spatiale de ces capteurs n'est pas suffisante pour des lunettes très fines. De ce fait, non seulement les lunettes ne sont pas ou très mal identifiées par le système, mais elles corrompent ou rendent inaccessibles l'ensemble des données visage situées dans le voisinage et derrière. L'utilisation de l'image et du modèle paramétrique de la paire de lunettes proposé permet de palier à ces problèmes structurels des capteurs de profondeur.

Les textures de la paire de lunettes, du visage et/ou du fond sont complétées et mises à jour au cours de **l'étape 359** du procédé de génération d'une image.

Lors du procédé, l'état des cartes représentent les éléments affichés à l'image évolue en fonction de la connaissance des éléments. Dans le présent exemple, le visage de l'individu 120 est en partie masqué par la paire de lunettes 111. Des éléments nouveaux du visage de l'individu 120 apparaissent lorsque l'individu 120 tourne la tête. Les informations couleurs peuvent également être faussées à cause de la réfraction des verres, notamment dans le cas où les verres sont teintés ou à cause des ombres portées de la paire de lunettes 111 sur le visage.

Ainsi, il est possible que pour un pixel donné d'une carte établie comme par exemple la carte du fond, ou celle du visage, l'information de couleur n'est pas disponible car l'utilisateur ne s'est pas encore assez déplacé pour faire apparaitre la zone nécessaire.

Les modèles statistiques par apprentissage sont utilisés sur la zone du visage, mais sont moins efficaces sur celle du fond. On peut ainsi remplacer les pixels de la zone du visage avec des techniques connues comme les modèles actifs d'apparence ou des modèles 3D morphables (en anglais « *3D morphable models* »).

Dans le cas où la prédiction d'apparence n'est pas possible, la technique de remplissage par localité spatiale est utilisé. La technique de remplissage, proche des techniques d'inpainting bien connues de l'homme du métier, s'appuie sur la synthèse de texture, en apportant des connaissances pertinentes pour la résolution fiable et temps réel du problème de remplissage. Etant donné que la topologie des modèles de lunettes est connue, et que la contrainte temps-réel est importante, le remplissage par patch est utilisé, ce qui garantit la continuité des couleurs entre les zones peintes et le respect des structures des textures. Cette technique nous permet une recherche rapide des éléments similaires dans l'image ainsi que le traitement en parallèle de la majorité des pixels à remplacer.

La technique de remplissage temps réel s'appuie sur une technique d'inpainting bien connue de l'homme du métier.

Le remplissage des zones à traiter s'effectue par pixel ou par patch, en utilisant un algorithme en trois étapes :

1. calcul des priorités des patches,
2. propagation de la texture et de l'information de structure,
3. mise à jour des valeurs de confiance.

Dans le présent exemple non limitatif de l'invention, le patch est formé par une fenêtre carrée centrée autour d'un pixel.

En connaissant la topologie des différents éléments, comme la paire de lunettes 111 et le modèle de visage, le remplissage des zones est effectué en temps réel en apportant plusieurs avantages par rapport aux techniques couramment utilisées par l'homme du métier :

- indépendance du sens de parcours ;
- possibilité de travailler par taille de patch arbitraire (jusqu'au pixel) ;
- éviter la recherche systématique et couteuse des patches similaires ; et
- garantie de la continuité des couleurs lors du remplissage.

Le calcul de la priorité des patches, bien connu de l'homme du métier, est suivi pour les zones pour lesquelles aucune information n'est disponible, comme par exemple les pixels du masque correspondant à la zone du fond.

Cependant pour les pixels situés sur la zone du visage, la connaissance de la topologie du visage permet de définir les directions et priorités de parcours et les zones d'échantillonnage *a priori* des patches. Par exemple, si les yeux sont cachés, on connait à l'avance de manière paramétrique le modèle géométrique de construction des yeux, et l'on peut ainsi adapter la priorité, la taille des patches et la direction de propagation en fonction des courbes liées à la topologie particulière d'un œil.

Dans les zones où l'on n'a pas d'information sur les structures paramétriques sous-jacentes, comme le fond ou la peau, c'est la connaissance de la topologie de la paire de lunettes qui permet de prédéfinir les directions de parcours de la propagation des structures selon le sens perpendiculaire au squelette de la forme ou perpendiculaire au contour.

Il convient de souligner que la propagation des structures n'est jamais loin, quelle que soit la pose du visage, de la direction de propagation des isophotes. En effet, la paire de lunettes, bien que pouvant comporter une monture épaisse, a des projections dans l'image telles que les différents bords d'un même sous-objet sont quasiment parallèles.

En privilégiant le parcours propre à la topologie de la paire de lunettes, deux aspects sont améliorés. D'abord, la recherche du patch est réduite au premier patch trouvé contenant de l'information dans cette direction. Naturellement, à chaque itération, les pixels remplacés dans l'itération précédente sont utilisés, permettant une continuité de la structure. La direction de propagation est aussi prédéfinie et n'est calculée que pour les patches jugés très structurés par un critère de structure. Par exemple, l'entropie du patch considéré, ou un coefficient dépendant de la norme des directions des gradients, peuvent être utilisés. Cette approche permet d'éviter un classement systématique et coûteux des priorités ainsi que des directions de propagation.

Afin de garantir la continuité des couleurs tout en préservant la structure, et éviter le lissage directionnel que l'on peut observer dans les parcours de type « pelure d'oignon », le procédé suivant est utilisé :
Soit le patch à remplir $T0$ centré autour du pixel $p0$ à une distance du front du masque à remplir tel que le patch contient des pixels d'une zone connue. On définit une distance maximale de confiance $d_{max}$ qui garantit une continuité des structures, et on se déplace dans les deux sens de la direction normale au contour $\vec{n}_C$ du masque lunette pour trouver les deux patches pleins $T1$ et $T2$ (centrés en $pT1$ et $pT2$) dans les zones « texture » les plus proches. Cette technique permet d'économiser les calculs de recherche du patch le plus proche colorimétriquement. On fait alors l'adaptation colorimétrique pour remplir les pixels du patch $T0$, en tenant compte de la distance $d1$ de $p0$ à $pT1$ et la distance $d2$ de $p0$ à $pT2$ afin de permettre l'interpolation linéaire suivante :

$$pi(u,v)_{T0} = \frac{d1}{(d1+d2)} * pi(u,v)_{T1} + \frac{d2}{(d1+d2)} * pi(u,v)_{T2} \, , ssi$$

$$d1 < d_{max} \; et \; d2 < d_{max}$$

où chaque $pi(u,v)_T$ correspond à un pixel d'un patch $T$. La notation $ssi$ correspond à l'abréviation de « si et seulement si ».

Dans les autres cas, on a :

$pi(u,v)_{T0} = pi(u,v)_{T1}, ssi \; d1 < d_{max} \; et \; d2 \geq d_{max}$
$pi(u,v)_{T0} = pi(u,v)_{T2}, ssi \; d1 \geq d_{max} \; et \; d2 < d_{max}$

Ce processus est appelé plusieurs fois jusqu'à ce que tous les pixels du masque soient traités.

Pour éviter les effets de pelure d'oignon, et ne pas reproduire les artefacts de structure dus à la compression de l'image, pour les patches de petite taille (jusqu'au pixel), on ajoute un déplacement local aléatoire pour les zones de structure faible. Un bruit uniforme ou gaussien peut être utilisé. Ce bruit uniforme est estimé en fonction du bruit moyen des zones alentours connues de l'image par les techniques bien connues de l'homme du métier. L'entropie peut être utilisée pour ordonner les structures, si cette dernière n'est pas déjà connue grâce au modèle. La zone remplacée peut être les pixels à remplacer du patch complet ou bien un patch plus petit jusqu'au pixel.

Il convient de souligner que les tailles de patch sont dépendantes de la taille de la structure à remplacer, à savoir de l'épaisseur de la paire de lunettes, et de la distance de l'utilisateur à la caméra.

La figure 6 illustre l'élaboration des masques à partir de l'image 220 de l'utilisateur 120 (figure 6a). Comme illustré en figure 6b, l'environnement $I_{bg}$ à l'arrière-plan de la paire de lunettes 111 est décomposé en plusieurs zones :

- une zone 470 correspondant au visage ; et
- une zone 471 correspondant à l'arrière-plan.

Il convient de souligner que la zone 470 peut être sous-divisée en sous-régions sémantiques 472, correspondant par exemple à la région des cheveux $472_1$, à la région de la peau $472_2$.

Au cours de **l'étape 360,** le procédé de génération élabore le masque de la paire de lunettes 111 par projection géométrique du modèle tridimensionnel de la paire de lunettes 111 sur un premier calque.

Il convient de souligner que le premier calque est préalablement vidé avant la projection géométrique. Ainsi, le premier calque comporte une image du modèle tridimensionnel de la paire de lunettes 111 selon le même angle de vue et la même taille que la paire de lunettes 111 réelle.

Le masque $TM_g$ de la paire de lunettes 111 est divisé en plusieurs parties :

- le masque $TM_{g\_f}$ de la monture 112b et des branches 117 ; et
- le masque $TM_{g\_l}$ des verres 113.

Un masque $TM_{g\_e}$ correspondant aux effets lumineux portés sur le visage, notamment les caustiques et les ombres, est créé simultanément. Le masque $TM_{g\_e}$ comprend également les effets lumineux sur les verres, notamment les reflets.

Le masque $TM_{g\_f}$ correspond à l'image de rendu RGBA du modèle de la paire de lunettes 111 pour les valeurs de paramètres visage $Pe_{Ma}$ et lunettes $Pe_{Mg}$ estimées à l'instant correspondant à l'image 220. Le masque $TM_{g\_f}$ tient compte des occultations éventuelles de la paire de lunettes 111 comme par exemple une main placée devant le visage ou une mèche de cheveux tombant sur le visage.

Un masque binaire $TMB_{g\_f}$ est obtenu en binarisant la couche alpha de rendu du masque $TM_{g\_f}$. La couche alpha représentant la transparence des pixels, la binarisation de la couche alpha permet de délimiter le masque $TM_{g\_f}$.

La figure 6c représente l'environnement $I_{bg}$ représentée en figure 6b sur lequel est ajouté le masque $TMB_{g\_f}$.

Les masques $TM_{g\_l}$ et $TM_{g\_e}$ sont déterminés en suivant la même technique que pour le masque $TM_{g\_f}$, en considérant respectivement pour chaque masque les verres 113 et les effets lumineux comme les reflets sur les verres ou les ombres portées sur le visage.

Le masque $TM_a$ correspondant au visage est créé au cours de **l'étape 365** à partir du modèle du visage comprenant les yeux, selon les paramètres d'orientation et de positionnement du visage estimés précédemment pour l'image 220.

Il convient de souligner que le masque binaire $TMB_{g\_f}$ de la paire de lunettes est contenu dans la région du visage $TM_a$ ou dans la carte du fond $T_{bg}$, comme on peut le voir sur la figure 6c.

Grâce à la connaissance topologique de l'objet paire de lunettes, un échantillonnage est réalisé dans une localité définie de part et d'autre du masque $TMB_{g\_f}$, selon une paramétrisation donnée par la topologie de la paire de lunettes, dans la direction de la normale au contour $\vec{n}_C$.

Ainsi, la branche est échantillonnée de chaque côté sur des zones de taille maximale représentant une partition $\Omega_R$ des régions définies par $TM_a$ ou $T_{bg}$. Dans le cas présent, un ajustement du découpage de l'espace est effectué aux courbes frontières des régions. Grâce à ce découpage, il est possible d'estimer le champ de transformations colorimétriques locales entre la prédiction d'apparence et l'image courante, pour les régions visage $TM_a$ et fond $T_{bg}$ privées de la région lunettes $TM_g$, ce qui permet de trouver les transformations dues à des changements de lumière globale, ou à des ombres portées

Pour le visage, des zones ne répondant pas à cette dynamique colorimétrique peuvent ne pas être considérées dans un premier temps, comme par exemple les sourcils, les cheveux ou la barbe, afin de se concentrer sur la peau, qui suit une dynamique pseudo-lambertienne et permet une adaptation basse et moyenne fréquence des couleurs. Ces zones sont repérées et segmentées grâce aux points et courbes trouvées lors de la reconnaissance des caractéristiques et peuvent être affinées dans l'espace texture. On calcule alors sur les zones de même type la transformation, comme dans les techniques de transfert de couleur ou de tone mapping bien connues de l'homme du métier.

Ce champ de transformations colorimétriques est appliqué respectivement aux images $TM_a$ et $T_{bg}$ pour former les cartes $TM_aWc$ et $T_{bg}Wc$. Il convient de souligner que la transformation colorimétrique est effectuée sur des sous-régions colorimétriquement cohérentes des images $TM_a$ et $T_{bg}$. Ces sous-régions cohérentes peuvent avantageusement être comprises dans une sous-région sémantique 472 afin d'améliorer le résultat final. En outre la transformation colorimétrique prend en compte les différences de dynamique entre les sous-régions de ces espaces.

Il convient de souligner qu'une technique d'édition d'image de type « *Poisson image editing* » peut également être utilisée afin d'éviter des effets de seuils au niveau des contours du masque.

Ces nouvelles images $TM_aWc$ et $T_{bg}Wc$ sont utilisées pour analyser les pixels de l'image courante $I$ dont la couleur n'est pas déterminée par la prédiction, notamment dans les zones verres et visage, afin de détecter les reflets et modifications lumineuses et géométriques des verres $TM_{g\_l}$, ainsi que les ombres portées de la monture $TM_{g\_e}$ dans les régions associées. Cette technique permet notamment de corriger les déformations du visage dues à la correction optique des verres de la paire de lunettes 111 portée par l'utilisateur 120.

On remplit ainsi les cartes $TMB_{g\_l}$ et $TMB_{g\_e}$ pour chaque pixel $x$ des régions considérées, selon la mesure

$$\forall x \in \Omega_R, x = \begin{cases} 1, & ||TM_aWc(x) - I(x)||^2 < \epsilon \\ 0, & sinon \end{cases}$$

avec $\Omega_R$ une sous-région colorimétriquement consistante de la région $\Omega = \{x; TMB_a(x) = 1\} \cup \{x; TMB_{bg}(x) = 1\}$. Le seuil $\epsilon$ est assez grand pour englober les couleurs d'aliasing et éviter les artefacts d'image de compression et du capteur. Le masque peut être ensuite dilaté en fonction de la confiance dans la connaissance de l'objet 3D et du recalage.

La figure 6d représente l'image représentée en figure 6c sur laquelle est ajoutée la carte $TMB_{g\_e}$ représentant les effets lumineux, reflets et ombres.

La carte des pixels à remplacer $TMB_g$ est l'union des cartes $TMB_{g\_l}$, $TMB_{g\_e}$, et $TMB_{g\_f}$, privée des pixels de la carte alpha d'occultations $TB_{fg}$.

$$TMB_g = \cup \left\{ TMB_{g_l}, TMB_{g_e}, TMB_{g_f}. \right\} \setminus TB_{fg}$$

La carte alpha d'occultations $TB_{fg}$ représente les pixels opaques de la carte d'occultations $T_{fg}$, c'est-à-dire les pixels de $T_{fg}$ dont la valeur alpha est égale à 1.

La figure 6e représente l'image représentée en figure 6d sur laquelle la carte alpha d'occultation $TB_{fg}$ est ajoutée.

La modification de l'aspect du masque représentant la paire de lunettes 111 est effectuée au cours de **l'étape 370.**

A partir de l'image 220, et de l'ensemble des masques créés, la modification de l'aspect remplace les pixels de l'image 220 correspondant au masque binaire $TMB_g$ par les valeurs adéquates qui permettent de faire disparaitre ou d'appliquer un traitement sur les parties visées de la paire de lunettes 111 dans l'image 220.

Les couleurs choisies peuvent être issues des techniques suivantes ou de leurs combinaisons :

    a. des couleurs de prédiction correspondant aux paramètres évalués géométrique et d'ajustement colorimétrique ;
    b. des couleurs apprises statistiquement offline associées à un modèle de forme ;
    c. des couleurs sans connaissance a priori qui garantissent une cohérence spatiale et une continuité des couleurs, pouvant être couplées à une connaissance de forme a priori ;
    d. des couleurs statistiquement apprises pendant le procédé 300.

Dans tous les cas, une contrainte de continuité des couleurs autour des frontières du masque est intégrée de manière implicite ou explicite.

La technique privilégiée dans le présent exemple est le remplacement de couleur par prédiction, car il gère au mieux les discontinuités du modèle. Même s'il peut être sensible à une erreur d'estimation, l'ajout d'une dilatation du masque ainsi qu'une contrainte de continuité des couleurs permet de proposer des résultats de remplacement non détectables pour l'œil humain. Grâce aux cartes calculées $TM_aWc$ et $T_{bg}Wc$, et la carte $T_{fg}$, la totalité des pixels peuvent être remplacés dans la majorité des cas.

Une autre technique préférentielle, généralement utilisé, est une technique d'édition d'image connue sous le nom de « *Poisson image editing* ». Cette technique consiste à résoudre la couleur des pixels de la zone à remplacer en garantissant une continuité aux contours du masque. Il convient de souligner que cette technique change la colorimétrie tout en gardant la structure de la texture appliquée au masque. Cette texture est en effet généralement déformée, par exemple par projection afin d'obtenir une texture adaptée à l'environnement de la paire de lunettes 111.

Il convient également de souligner que la technique d'édition d'images de type « *Poisson image editing* » nécessite une connaissance préalable de la texture à appliquer, contrairement à la technique d'inpainting qui permet de combler des pixels manquants à partir de pixels à proximité dans l'image.

L'image finale 210 est ensuite générée au cours de **l'étape 380** du procédé 300 en aplatissant les différents calques se superposant à l'image initiale 220, à savoir à partir de l'arrière-plan :

- image initiale 210 ;
- premier calque comprenant le masque de la paire de lunettes 111 ;
- deuxième calque comprenant le masque d'occultations.

Ainsi l'individu 120 portant la paire de lunettes 111 voit son image sur l'écran 130, comme dans un miroir, sans la paire de lunettes 111 conservée sur le visage. Il peut alors essayer virtuellement la nouvelle paire de lunettes 110 qui vient se positionner sur le visage en lieu et place de la paire de lunettes 111 réelle. La paire de lunettes virtuelle 110 est positionnée sur le visage 121 de l'individu 120 grâce à un calque intermédiaire s'insérant entre le premier calque et le deuxième calque. Le calque intermédiaire comprend une projection d'un modèle de la paire de lunettes virtuelle 110 positionné de manière réaliste sur le visage 121 de l'individu 120.

Pour les détails techniques du positionnement de la paire de lunettes virtuelle 110 ou de la génération du calque intermédiaire, l'homme du métier peut par exemple se référer à la demande FR 10 50305 ou à la demande FR 15 51531 décrivant de manière détaillée des techniques permettant l'essayage d'une paire de lunettes virtuelle par un individu.

Autre exemple d'un mode de réalisation particulier de l'invention

La figure 7 représente un dispositif 500 d'essayage d'un objet virtuel 510 par un individu 520 portant la paire de lunettes 111 sur le visage.

Le dispositif 500 comprend un écran tactile 530 fixé verticalement sur un support 531, une caméra 532 centrée au-dessus de l'écran 530, deux caméras périphériques 533 et une unité de traitement 534.

Le dispositif 500 comprend également un dispositif de mesure 537 de la distance d'un élément par rapport à l'écran 530, comprenant un projecteur à infrarouge 535 projetant un motif et une caméra à infrarouge 536.

Le dispositif 500 comprend en outre un dispositif de modélisation 540 comprenant un plateau tournant 541 destiné à recevoir une paire de lunettes en son centre, deux caméras numériques 542 fixes, orientées vers le centre du plateau 541 et un fond uni 543 destiné à être en arrière-plan de la paire de lunettes modélisée. Le dispositif de modélisation 540 relié à l'unité de traitement 534 peut ainsi actionner le plateau tournant 541 et acquérir des images de la paire de lunettes 111 sous des angles de vues différents.

Dans une variante de ce mode de réalisation particulier de l'invention, le plateau du dispositif de modélisation 540 est fixe. Le dispositif de modélisation 540 comprend alors deux caméras numériques supplémentaires fixes orientées vers le centre du plateau. La position des deux caméras supplémentaires correspond à la rotation de 90 degrés de la position des deux caméras 542 autour de l'axe central normal au plateau.

Il convient de souligner que le dispositif de modélisation 540 effectue une calibration en acquérant pour chaque caméra 542 une image du fond uni 543 seul.

L'individu 520 retire la paire de lunettes 111 qu'il porte sur le visage et la place, branches 117 ouvertes, au centre du plateau tournant 541. Afin de bien positionner la paire de lunettes 111, des repères sont prévus sur le plateau 541.

La première caméra $542_1$ orientée de telle sorte que l'axe optique de la caméra $542_1$ acquière une image de face de la paire de lunettes 111, puis après une rotation de 90° du plateau tournant 541 une image de côté de la paire de lunettes 111.

Simultanément, la deuxième caméra $542_2$ acquière des images de la paire de lunettes 111 en vue de plongée, de 3/4 face et de 3/4 arrière. La position de la caméra $542_2$ est ainsi surélevée, à environ 45° par rapport au plan médian du plateau 541.

Un modèle tridimensionnel de la paire de lunettes 111 est créé à partir des quatre images acquises de la paire de lunettes 111 et de deux images du fond.

A cet effet, la paire de lunettes 111 est segmentée dans chaque image acquise en effectuant la différence entre les images du fond et les images avec la paire de lunettes 111, ce qui permet de créer des masques binaires des différents éléments.

Pour la modélisation, la monture 112 de la paire de lunettes 111 est considérée comme un assemblage de trois surfaces 3D :

- une surface représentant la face 112b de la paire de lunettes 111 ; et
- une surface pour chaque branche 117 de la paire de lunettes 111.

Il convient de souligner qu'étant donné que la paire de lunettes 111 est symétrique, les deux branches 117 sont similaires et seul l'angle d'ouverture entre chaque branche 117 et la face 112b peut varier. Seul un modèle tridimensionnel d'une branche 117 est ainsi généré. Le modèle tridimensionnel de l'autre branche 117 est ensuite élaboré à partir du modèle de la première branche 117 symétriquement par rapport au plan médian principal de la première branche 117.

Afin d'estimer la surface 3D, un calcul de la carte de distance est effectué pour chacune des images à partir des masques extraits de la segmentation. L'estimation des paramètres de la surface 3D se fait via une minimisation respectant les critères de symétrie centrale et de continuité de la monture de la paire de lunettes 111.

Une estimation d'un contour 2D de la face 112b et des branches 117 est effectuée à partir des masques binaires de la face 112b et des branches 117.

Le contour 2D est ensuite projeté sur la surface 3D correspondante. Une épaisseur est ajoutée à chacun des contours 2D projetés sur les surfaces pour obtenir les modèles tridimensionnels de la face 112b et des branches 117 formant le modèle tridimensionnel de la paire de lunettes 111.

A cet effet, à partir des points des contours 2D, une triangulation de Delaunay est effectuée. Cette triangulation est utilisée sur les points de la surface 3D pour créer le modèle de la paire de lunettes 111. Les images acquises de la paire de lunettes 111 sont appliquées en texture sur le modèle de la paire de lunettes 111.

Il convient de souligner que des modèles statistiques 3D de chaque élément de la paire de lunettes 111 peuvent être utilisés pour le paramétrage et le maillage des surfaces 3D à partir des contours 2D.

Une image de l'individu 520 sans lunettes est acquise par la caméra 532.

A partir de l'image de l'individu 520 sans lunettes, un modèle $M_a$ d'un avatar représentant l'individu 520 est élaboré à partir des images acquises et des mesures de la distance à l'écran des éléments de l'image, suivant le procédé d'élaboration du modèle d'avatar $M_a$ précédemment décrit à l'étape 355 du premier exemple de mode de réalisation.

Dans des variantes de mise en œuvre de l'invention, le dispositif comprend trois caméras, par exemple une caméra centrée verticalement par rapport à l'écran et deux caméras positionnées horizontalement symétriquement de part et d'autre de la caméra centrale. Ces trois caméras permettent d'obtenir trois images de l'individu 520 avec des angles de vue différents afin d'améliorer la représentation du visage de l'individu.

Une texture aplatie du visage de l'individu 520 est extraite du modèle d'avatar $M_a$.

Avant d'obtenir un masque en 2D de la paire de lunettes 111, la paire de lunettes 111 est suivie dans la séquence d'images acquises par la caméra 132 par un procédé de tracking 600 de la paire de lunettes 111.

Le procédé de tracking 600, illustré sous la forme d'un schéma synoptique dans la figure 8, comprend une première étape 610 d'initialisation.

L'étape d'initialisation 610 permet de positionner le modèle $M_g$ de la paire de lunettes 111 sur l'avatar $M_a$ et d'ouvrir les branches du modèle $M_g$ de la même manière que la paire de lunettes 111 réelle placée sur le visage de l'individu 520.

Pour cela, un premier positionnement du modèle $M_g$ est fait en 3D sur l'avatar $M_a$ de façon à ce que le modèle de la paire de lunettes 111 repose sur le nez et les oreilles de l'avatar. Le modèle $M_g$ est ainsi positionné selon des paramètres de pose calculés. Les paramètres de pose comprennent l'orientation par rapport à la caméra et le grossissement à appliquer au modèle $M_g$ pour obtenir la paire de lunettes 111 affiché à l'image.

L'avatar est positionné et orienté selon la caméra virtuelle ayant la même orientation et les mêmes paramètres optiques que la caméra 532. Pour cela, la position et l'orientation du visage sont déterminées sur chaque image par l'intermédiaire d'un procédé de tracking du visage bien connu de l'homme du métier. Le tracking du visage est basé sur le suivi de points caractéristiques du visage. Cependant, il est à souligner que les points caractéristiques masqués à l'image, notamment ceux se trouvant derrière une paire de lunettes ou derrière des verres teintés, ne sont pas pris en compte dans le tracking du visage.

Une projection sur un premier calque se superposant à l'image initiale, du modèle de la paire de lunettes 111 positionné sur l'avatar permet d'obtenir un masque de la paire de lunettes 111.

Afin d'affiner la position du masque de la paire de lunettes 111 sur le premier calque, les paramètres de pose sont calculés en minimisant une fonction de coût basée sur deux composantes :

- une composante calculée en fonction des points caractéristiques du visage et du système des yeux visibles sur l'image précédente dans la séquence et en fonction d'images préalables de la séquence ;
- une composante calculée en fonction des contours de la paire de lunettes 111 dans l'image et du modèle $M_g$ de la paire de lunettes 111 préalablement synthétisé.

Après avoir initialisé le modèle $M_g$ de la paire de lunettes 111, le procédé de tracking 600 sélectionne, au cours d'une deuxième étape 620, l'ensemble $\omega$ des points du modèle $M_g$ dont la normale est sensiblement perpendiculaire à l'axe formé entre le point et la caméra virtuelle.

Il convient de souligner que dans le cas où la face 112b de la paire de lunettes 111 est sensiblement parallèle au plan de la caméra 132, les branches 117 étant peu visibles, seule la face du modèle $M_g$ est prise en compte dans le tracking de la paire de lunettes 111.

Il convient également de souligner que dans le cas où le visage est fortement tourné, rendant peu visible la face 112b, seule la branche du modèle $M_g$ est prise en compte dans le tracking de la paire de lunettes 111.

Au cours de la troisième étape 630, le procédé de tracking 600 sélectionne un sous-échantillon de n points parmi l'ensemble $\omega$ des points du modèle $M_g$. La projection $p2D_{m=1..n}$ des n points sur l'image présentent un espacement sensiblement uniforme et régulier. Ainsi, lorsque la face 112b de la paire de lunettes 111 est quasiment parallèle au plan image de la caméra, le sous-échantillon comprend un nombre faible voire nul de points des branches.

Les vecteurs $p2D_{m=1..n}$ correspondant aux projections des normales des n points de l'ensemble $\omega$ sont calculés au cours de la quatrième étape 640.

A partir des projections $p2D$ et des vecteurs $n2D$, le procédé 600 effectue pour chaque indice $m$, une recherche du point $p\_grad_m$ de l'image ayant le plus fort gradient le long de la projection $p2D_m$ de la normale au point $n2D_m$.

Le procédé de tracking 600 minimise ensuite au cours de la cinquième étape 650 la fonction du calcul de la distance entre les points $p2D$ et $p\_grad$. Lorsque la valeur minimale est atteinte, la position du modèle $M_g$ est considérée comme représentative de la position réelle de la paire de lunettes 111.

Un masque couvrant la paire de lunettes 111 est créé à partir de la projection du modèle $M_g$ sur le premier calque.

La modification de l'aspect du masque de la paire de lunettes 111 est effectuée en remplaçant la couleur de la monture 112 de la paire de lunettes 111 réellement portée par l'individu 520 par une nouvelle couleur.

Une régularisation de la luminosité est effectuée afin de rendre réaliste la modification de la couleur de la monture 112.

Ainsi, l'individu 520 voit son image à l'écran 530 avec la même paire de lunettes 111 mais comprenant une couleur différente de la monture 112.

Dans une variante de ce mode de mise en œuvre de l'invention, la modification de l'aspect du masque de la paire de lunettes 111 permet d'occulter la paire de lunettes 111 dans l'image finale afin que l'individu 520 portant la paire de lunettes 111 sur son visage voit son image à l'écran 530 sans la paire du lunettes 111.

A cet effet, une génération de la représentation de l'environnement de la paire de lunettes est effectuée tel que décrit précédemment dans un autre mode de réalisation de l'invention. La projection des valeurs des textures du visage et de l'arrière-plan représentant l'environnement de la paire de lunettes 111 est ainsi effectuée et permet de remplacer chaque pixel de l'image initiale correspondant au masque de la paire de lunettes 111 par un pixel issu de la projection. Afin de rendre l'image finale réaliste, un ajustement de la colorimétrie de tout ou partie des nouveaux pixels du masque est effectué afin par exemple d'effacer d'éventuelles différences colorimétriques au niveau des bords du masque. A cet effet, une technique d'édition d'images connue sous le nom de « *Poisson image editing* » est utilisée.

Autre exemple d'un mode de réalisation particulier de l'invention

La figure 9 représente un dispositif 800 de réalité augmentée utilisée par un individu 820 portant la paire de lunettes 111 sur le visage. Dans cet exemple, la paire de lunettes 111 est montée de verres correctifs adaptés à la vue de l'individu 820.

L'individu 820 se tient face à une caméra 832 reliée à un écran 830 affichant en direct l'image de la tête 821 de l'individu 820 comme dans un miroir. L'image affichée à l'écran 830 présente la tête de l'individu 820 sans la paire de lunettes 111 sur le visage de l'individu 820. L'individu 820 peut ainsi se voir nettement sans sa paire de lunettes, comme s'il portait des lentilles.

Afin d'occulter en temps réel la paire de lunettes 111 réellement porté par l'individu 820 sur chaque image, à partir d'un instant donné, de la séquence d'images, également appelé vidéo, affichée à l'écran 830, un procédé de génération d'une image finale à partir d'une image initiale est utilisée.

Au cours de ce procédé, la paire de lunettes 111 est détectée et suivie sur chaque image de la séquence d'images. Un modèle de la paire de lunettes 111 est généré et orienté d'une manière identique à la paire de lunettes 111 afin de créer un masque par projection sur un calque venant se superposer à l'image initiale.

L'aspect du masque couvrant la paire de lunettes 111 est modifié afin d'effacer à l'écran la paire de lunettes 111 portée sur le visage de l'individu.

A cet effet, une carte plane de l'environnement en arrière-plan de la paire de lunettes 111 est créée et remise à jour de manière dynamique en prenant en compte les informations acquises à chaque image de la vidéo.

Une méthode d'inpainting permet de déterminer la couleur de chaque pixel du masque de la paire de lunettes 111 en fonction d'au moins un pixel de l'image à proximité du pixel du masque.

Il convient de souligner que dans le procédé utilisé dans le présent exemple le visage est compris dans l'environnement de la paire de lunettes 111 mais n'est pas détecté pour l'élaboration de la carte représentant l'environnement. Seule la paire de lunettes 111 est détectée et suivie.

Dans des variantes de ce mode de réalisation particulier de l'invention, la présence du visage de l'individu 820 est détectée mais n'est pas suivie. Un modèle du visage est ainsi généré et positionné en rapport à la position de la paire de lunettes suivie à l'image. Le modèle du visage est utilisé en projection pour l'élaboration de la carte de l'environnement. Le modèle de visage peut également être directement utilisé par la méthode d'inpainting.

L'individu 820 peut essayer une paire de lunettes virtuelles ou un maquillage et se voir à l'écran avec. Il convient de souligner que dans le cas de l'essayage d'un objet virtuel, seul l'aspect de la partie apparente de la paire de lunettes 111, c'est-à-dire non couverte par la projection de l'objet virtuel, peut être avantageusement modifié, permettant ainsi de gagner en temps de calcul.

Autre exemple de mode de réalisation de l'invention

La figure 11 représente un écran 910 affichant une vidéo 915 stockée dans une mémoire informatique ou un flux vidéo temps réel issu d'une caméra.

La vidéo 915 présente la tête d'un individu 920 portant la paire de lunettes 111 sur le visage 921 avant traitement.

La figure 12 représente l'écran 910 affichant la vidéo 915 mais dans laquelle la paire de lunettes 111 est occultée sur chaque image de la vidéo par un procédé de génération d'une image finale à partir d'une image initiale selon l'invention.

Au cours de ce procédé, le visage 921 est détecté et suivi sur chaque image de la vidéo. Sur chaque image, le procédé ajoute un calque comprenant un masque opaque couvrant la paire de lunettes 111. Il convient de souligner que le masque est dimensionné pour couvrir la majeure partie des formes et des tailles de paires de lunettes. Le masque n'est donc pas lié à la paire de lunettes 111 qui n'est pas détectée dans le présent exemple.

Le procédé génère ainsi un calque pour chaque image, sur lequel le masque est orienté et dimensionné en relation avec le visage détecté.

Pour chaque calque, le procédé de génération applique sur le masque une texture provenant d'un modèle du visage préalablement établi sans la paire de lunettes.

Afin que l'image finale soit réaliste, le procédé comprend une technique de « *relighting* » de la texture du masque, permettant d'ajuster la colorimétrie de la texture à la lumière réelle éclairant le visage 921.

Afin de permettre l'analyse des sources de lumières, des techniques bien connues en soi sont utilisées, comme par exemple la stéréophotométrie ou la technique dite « *shape from shading* », sur les parties du visage comme la peau qui suivent un modèle de surface pseudo-lambertien. Les sources de lumière et leurs paramètres sont alors utilisés comme source de synthèse pour le « relighting » du visage.

Des trous peuvent être établis sur chaque masque au niveau des yeux du visage 921 afin de les rendre visible sur chaque image.

Il convient de souligner qu'afin que, pour des raisons de réalisme, les trous ne sont pas effectués sur le masque lorsque les yeux sont déformés optiquement par les verres de la paire de lunettes 111 ou lorsque les verres sont teintés.

Dans le cas où les trous ne sont pas effectués sur les masques, un calque comprenant des paires d'yeux resynthétisés est ajouté par-dessus le calque du masque.

L'orientation des yeux synthétisés peut avantageusement être établie à partir de l'orientation réelle des yeux détectés et suivis par des techniques bien connues de l'homme du métier.

Autres avantages et caractéristiques optionnelles de l'invention

Dans des variantes de mise en œuvre de l'invention, un objet réel à effacer de l'image peut être un chapeau, un foulard, des cheveux ou tout autre élément couvrant partiellement ou totalement un visage. Le procédé peut également s'appliquer à tout autre objet réel que l'on cherche à occulter sur une image, comme par exemple un vêtement porté par un individu.

Dans des variantes de mise en œuvre de l'invention, un objet à placer sur le visage d'un individu en remplacement de la paire de lunettes portée sur le visage est du maquillage, des bijoux voire des vêtements. Un individu portant une paire de lunettes peut ainsi essayer virtuellement un maquillage ou une tenue de soirée en enlevant à l'image la paire de lunettes portée, permettant ainsi de simuler le port de lentilles de contact. Il convient de souligner que dans le cas de l'essayage d'un vêtement porté sur le corps de l'individu, tel un costume ou une robe de soirée, un scan de la morphologie du corps de l'individu peut être utile pour obtenir un rendu réaliste du port du vêtement.

Dans des variantes de mise en œuvre de l'invention, un individu portant une paire de lunettes se voit à l'écran avec la même paire de lunettes mais avec une monture présentant une couleur, une texture et/ou des matériaux différents de ceux de la monture de la paire de lunettes réellement portée.

Dans des variantes de mise en œuvre de l'invention, un individu portant une paire de lunettes se voit à l'écran avec la même paire de lunettes mais avec des verres de teinte différente de celle des verres de la paire de lunettes réellement portée.

Dans des variantes de mise en œuvre de l'invention, un individu portant une paire de lunettes se voit à l'écran avec la même paire de lunettes mais avec des verres comportant un traitement différent de celui des verres de la paire de lunettes réellement portée. Le traitement correspond à l'ajout ou à la suppression d'un ou d'une combinaison de traitements bien connus des opticiens, comme par exemple un traitement anti-reflets ou un amincissement des verres.

Dans des variantes de mise en œuvre de l'invention, un individu portant une paire de lunettes se voit à l'écran essayer une nouvelle paire de lunettes virtuelle où les zones des verres de la paire de lunettes réelle compris à l'image à l'intérieur des cercles de la paire de lunettes virtuelle sont conservées, permettant ainsi d'augmenter le réalisme de la paire de lunettes virtuelle. En effet, en conservant une partie des verres réels, les reflets réels dus à l'environnement sont également conservés à l'image. Il convient de souligner que la couleur de la partie conservée des verres réels peut être modifiée afin d'obtenir une paire de lunettes virtuelle avec des verres teintés ou non teintés, tout en conservant les reflets réels sur les verres.

Dans des variantes de mise en œuvre de l'invention, un objet virtuel est superposé partiellement à l'objet réel à effacer de l'image et seules les parties visibles du masque correspondant de l'objet réel sont modifiées.

Dans des variantes de mise en œuvre de l'invention, l'objet réel est effacé partiellement de l'image ou majoritairement de l'image.

## Revendications

**1.** Procédé de génération (300) d'une image finale (210) à partir d'une image initiale (220) comprenant un objet (111) apte à être porté par un individu (120 ; 520 ; 820 ; 920), comprenant les étapes suivantes :

a) détection (310) de la présence dudit objet dans l'image initiale ;
a') élaboration (360) d'un masque couvrant au moins partiellement l'objet sur l'image initiale ;
b) superposition d'un premier calque sur l'image initiale, le premier calque comprenant le masque couvrant au moins partiellement l'objet sur l'image initiale ;
**caractérisé en ce qu'**il comprend les étapes suivantes:

b') élaboration (355, 357) d'au moins une texture reproduisant au moins un élément en arrière-plan de l'objet ;
c) modification (370) de l'aspect d'au moins une partie du masque en appliquant au masque ladite texture afin d'occulter tout ou partie de l'image de l'objet dans l'image finale.

**2.** Procédé de génération d'une image selon la revendication 1, **caractérisé en ce que** la modification de l'aspect du masque comprend une étape de remplacement de la texture d'une partie ou de la totalité de l'objet sur l'image finale.

**3.** Procédé de génération d'une image selon l'une quelconque des revendications 1 à 2, **caractérisé en ce que** la modification de l'aspect du masque comprend une étape de détermination de la texture d'une partie ou de la totalité de l'objet, la texture reproduisant les éléments en arrière-plan de l'objet afin d'occulter tout ou partie de l'objet sur l'image finale.

**4.** Procédé de génération d'une image selon l'une quelconque des revendications 1 à 3, **caractérisé en ce que** le masque couvre également tout ou partie de l'ombre portée de l'objet.

**5.** Procédé de génération d'une image selon l'une quelconque des revendications 1 à 4, **caractérisé en ce qu'**il comprend également l'étape suivante :
d) superposition d'un deuxième calque sur l'image initiale au-dessus du premier calque, le deuxième calque comprenant au moins un élément couvrant partiellement le masque.

**6.** Procédé de génération d'une image selon l'une quelconque des revendications 1 à 5, **caractérisé en ce qu'**il comprend également avant l'étape b), les étapes suivantes :

- détermination de l'orientation de l'objet par rapport à un dispositif d'acquisition de l'image initiale ;
- détermination d'une dimension caractéristique de l'objet sur l'image initiale.

**7.** Procédé de génération d'une image selon la revendication 6, **caractérisé en ce qu'**il comprend également avant l'étape b), les étapes suivantes :

- élaboration d'un modèle tridimensionnel de l'objet ;
- élaboration du masque par projection géométrique du modèle tridimensionnel sur le premier calque, le modèle ayant la même orientation et la même dimension caractéristique sur le premier calque que l'objet.

**8.** Procédé de génération d'une image selon la revendication 7, **caractérisé en ce que** l'élaboration du modèle de l'objet est effectuée à partir d'au moins une image de l'objet seul.

**9.** Procédé de génération d'une image selon l'une quelconque des revendications 1 à 8, **caractérisé en ce que** l'objet est porté sur le visage d'un individu.

**10.** Procédé de génération d'une image selon la revendication 9, **caractérisé en ce que** l'élaboration du modèle de l'objet est effectuée à partir d'au moins une image de l'objet porté sur le visage de l'individu.

**11.** Procédé de génération d'une image selon l'une quelconque des revendications 9 à 10, **caractérisé en ce que** l'objet comprend une monture s'étendant de part et d'autre du visage, et au moins un verre assemblé à ladite monture.

**12.** Procédé de génération d'une image selon la revendication 11, **caractérisé en ce qu'**il comprend également une étape d'identification de la monture parmi les montures préalablement modélisées et stockées dans une base de données, le masque étant élaboré à partir du modèle de la monture identifiée.

**13.** Procédé de génération d'une image selon la revendication 12, **caractérisé en ce que** l'identification de la monture est effectuée en générant des courbes de support venant s'ajuster sur les contours de la monture.

**14.** Procédé de génération d'une image selon l'une quelconque des revendications 12 à 13, **caractérisé en ce que** l'identification de la monture est basée sur au moins un des critères suivants :

- forme de la monture ;
- couleur(s) de la monture ;
- texture(s) de la monture ;
- logo présenté par la monture.

**15.** Procédé de génération d'une image selon l'une quelconque des revendications 1 à 14, **caractérisé en ce qu'**il comprend également une étape d'élaboration d'une représentation de l'environnement de l'objet.

**16.** Procédé de génération d'une image selon la revendication 15, **caractérisé en ce que** l'étape de modification de l'aspect du masque comprend les sous-étapes suivantes :

- projection géométrique de la représentation de l'environnement sur un calque intermédiaire superposé au premier calque ;
- détermination de la nouvelle couleur d'un pixel du masque en fonction de la couleur d'au moins un pixel du calque intermédiaire à proximité du pixel du masque.

**17.** Procédé de génération d'une image selon la revendication 16, **caractérisé en ce que** la détermination de la nouvelle couleur met en œuvre une méthode d'édition d'image de type « *Poisson image editing* ».

**18.** Procédé de génération d'une image selon l'une quelconque des revendications 15 et 17, **caractérisé en ce qu'**il comprend également une étape de détection de la présence d'un visage dans l'environnement et **en ce que** la représentation de l'environnement comprend un modèle du visage détecté sur lequel est appliquée une texture du visage.

**19.** Procédé de génération d'une image selon la revendication 18, **caractérisé en ce qu'**il comprend également une étape de détermination de l'orientation du visage par rapport au dispositif d'acquisition et **en ce que** le modèle du visage est disposé sensiblement selon l'orientation préalablement établie.

**20.** Procédé de génération d'une image selon l'une quelconque des revendications 18 à 19, **caractérisé en ce que** le masque couvrant au moins partiellement l'objet porté sur le visage est élaboré à partir de la projection géométrique du modèle de visage sur le premier calque.

**21.** Procédé de génération d'une image selon l'une quelconque des revendications 18 à 20, **caractérisé en ce qu'**il comprend également les étapes suivantes :

- analyse d'au moins une source de lumière éclairant le visage de l'individu ;
- transformation colorimétrique de tout ou partie du modèle de visage.

**22.** Procédé de génération d'une image selon l'une quelconque des revendications 20 à 21, **caractérisé en ce que** la couleur d'un pixel sur la texture du visage est déterminée par l'intermédiaire d'une méthode d'inpainting à partir des couleurs d'un patch à proximité du pixel.

**23.** Procédé de génération d'une image selon la revendication 22, **caractérisé en ce que** la position du patch est située sensiblement sur la perpendiculaire et/ou sur la verticale par rapport audit pixel.

**24.** Procédé de génération d'une image selon l'une quelconque des revendications 21 à 23, **caractérisé en ce que** la couleur d'un pixel sur la texture du visage est déterminée par l'intermédiaire d'une méthode d'inpainting à partir du modèle du visage, préalablement établi et orienté, le modèle du visage comprenant une représentation des yeux.

**25.** Procédé de génération d'une image selon l'une quelconque des revendications 20 à 24, **caractérisé en ce qu'**il comprend également une étape d'identification d'au moins une zone oculaire sur la texture du visage, la zone oculaire correspondant à la position d'un œil du visage détecté.

**26.** Procédé de génération d'une image selon la revendication 25, **caractérisé en ce que** le remplissage de la zone oculaire est effectué en connaissant la topologie de l'œil du visage détecté.

**27.** Procédé de génération d'une image selon l'une quelconque des revendications 15 à 17, **caractérisé en ce que** l'élaboration de la représentation de l'environnement de l'objet porté sur le visage d'un individu est effectuée sans détecter de visage dans l'environnement.

**28.** Procédé de génération d'une image selon l'une quelconque des revendications 15 à 27, **caractérisé en ce que** l'élaboration de la représentation de l'environnement comprend une sous-étape de correction de la déformation optique due à un élément transparent placé entre l'environnement et un dispositif d'acquisition de l'image initiale.

**29.** Procédé de génération d'une image selon l'une quelconque des revendications 1 à 28, **caractérisé en ce qu'**il est appliqué à tout ou partie d'une séquence d'images formant une vidéo.

**30.** Procédé de génération d'une image selon la revendication 29, **caractérisé en ce que** la représentation de l'environnement et/ou le modèle de l'objet sont mis à jour à chaque image de la séquence.

**31.** Procédé de génération d'une image selon l'une quelconque des revendications 15 à 30, **caractérisé en ce que** la représentation de l'environnement et/ou le modèle de l'objet est mis à jour à partir d'une pluralité d'images initiales prises selon une pluralité d'angles de vues distincts.

**32.** Procédé de génération d'une image selon l'une quelconque des revendications 1 à 31, **caractérisé en ce que** la génération de l'image finale est effectuée en temps réel à partir de l'image initiale.

**33.** Procédé de réalité augmentée destiné à être utilisé par un individu portant un dispositif portable sur le visage, **caractérisé en ce qu'**il comprend les étapes suivantes :

- acquisition en temps réel d'une vidéo de l'individu portant le dispositif portable sur le visage ;
- affichage en temps réel de la vidéo dans laquelle l'aspect du dispositif portable est totalement ou en partie modifié par le procédé de génération d'une image selon l'une quelconque des revendications 1 à 32.

**34.** Procédé de réalité augmentée selon la revendication 33, **caractérisé en ce que** le dispositif portable est totalement ou en partie occulté de la vidéo affiché en temps réel.

**35.** Procédé de réalité augmentée selon l'une quelconque des revendications 33 à 34, **caractérisé en ce que** le dispositif portable porté par l'individu comprend des verres correctifs adaptés à la vue de l'individu.

**36.** Procédé de réalité augmentée selon l'une quelconque des revendications 33 à 35, **caractérisé en ce que** l'individu portant le dispositif portable essaye un objet virtuel se superposant au moins partiellement dans la vidéo sur le dispositif portable partiellement ou totalement occulté.

**37.** Procédé de réalité augmentée selon l'une quelconque des revendications 33 à 36, **caractérisé en ce qu'**il comprend une étape d'initialisation du modèle du visage de l'individu à partir d'au moins une image de l'individu ne portant pas le dispositif portable sur le visage.

**38.** Procédé de réalité augmentée selon l'une quelconque des revendications 33 à 36, **caractérisé en ce qu'**il comprend une étape d'initialisation du modèle du visage de l'individu à partir d'une pluralité d'images de l'individu portant le dispositif portable, les images correspondant à des angles de vues différents du visage.

**39.** Procédé de réalité augmentée selon l'une quelconque des revendications 33 à 38, **caractérisé en ce qu'**il comprend une étape d'initialisation du modèle du dispositif portable à partir d'au moins une image dudit dispositif acquise dans un dispositif de modélisation dédié.

**40.** Procédé de réalité augmentée selon l'une quelconque des revendications 33 à 38, **caractérisé en ce qu'**il comprend une étape d'initialisation du modèle de dispositif portable à partir d'au moins une image de l'individu portant le dispositif portable.

**41.** Dispositif (100 ; 500 ; 800) de réalité augmentée permettant l'essayage d'un objet virtuel (110 ; 510) par un individu (120 ; 520 ; 820 ; 920) portant un dispositif de vision (111), l'objet virtuel couvrant au moins partiellement le dispositif de vision, **caractérisé en ce qu'**il comprend :

- au moins une caméra (532 ; 832) acquérant une vidéo de l'individu ;
- une unité de traitement (134 ; 534) de la vidéo acquise, l'unité de traitement occultant au moins partiellement sur la majorité ou la totalité des images de la vidéo le dispositif de vision par l'intermédiaire d'un procédé de génération d'une image selon l'une quelconque des revendications 3 à 32 ;
- au moins un écran (130 ; 530 ; 830) affichant la vidéo traitée de l'individu.

**42.** Dispositif de réalité augmentée selon la revendication 41, **caractérisé en ce que** l'écran est vertical et **en ce que** la caméra est fixée sensiblement dans le plan de l'écran.

**43.** Dispositif de réalité augmentée selon l'une quelconque des revendications 41 et 42, **caractérisé en ce qu'**il comprend deux caméras espacées, parallèlement à un bord de l'écran, d'une distance comprise entre trente et cinquante centimètres.

**44.** Dispositif de réalité augmentée selon la revendication 43, **caractérisé en ce qu'**il comprend en outre une troisième caméra sensiblement sur l'axe médian entre les deux premières caméras.

**45.** Dispositif de réalité augmentée selon l'une quelconque des revendications 41 à 44, **caractérisé en ce que** l'écran est tactile.

**46.** Dispositif de réalité augmentée selon l'une quelconque des revendications 41 à 45, **caractérisé en ce que** l'affichage de la vidéo acquise et modifiée est effectué en temps réel.

**47.** Dispositif de réalité augmentée selon l'une quelconque des revendications 41 à 46, **caractérisé en ce qu'**il comprend un dispositif d'acquisition du modèle tridimensionnel du dispositif de vision.


**Patentansprüche**

**1.** Verfahren zur Erzeugung (300) eines endgültigen Bilds (210) aus einem anfänglichen Bild (220), umfassend ein Objekt (111), das dazu geeignet ist, von einer Person (120; 520; 820; 920) getragen zu werden, umfassend die folgenden Schritte:

a) Erkennen (310) des Vorhandenseins des Objekts in dem anfänglichen Bild;
a') Erstellen (360) einer Maske, die das Objekt in dem anfänglichen Bild zumindest zum Teil abdeckt;
b) Überlagern einer ersten Ebene auf dem anfänglichen Bild, wobei die erste Ebene die Maske umfasst, die das Objekt in dem anfänglichen Bild zumindest zum Teil abdeckt;

**dadurch gekennzeichnet, dass** es die folgenden Schritte umfasst:

b') Erstellen (355, 357) von mindestens einer Textur, die mindestens ein Element im Hintergrund des Objekts reproduziert;
c) Modifizieren (370) des Aussehens von mindestens einem Teil der Maske durch Anwenden der Textur auf die Maske, um das gesamte Bild oder einen Teil des Bilds des Objekts im endgültigen Bild zu verbergen.

**2.** Verfahren zur Erzeugung eines Bilds nach Anspruch 1, **dadurch gekennzeichnet, dass** das Modifizieren des Aussehens der Maske einen Schritt des Ersetzens der Textur von einem Teil oder der Gesamtheit des Objekts in dem endgültigen Bild umfasst.

**3.** Verfahren zur Erzeugung eines Bilds nach einem der Ansprüche 1 bis 2, **dadurch gekennzeichnet, dass** das Modifizieren des Aussehens der Maske einen Schritt des Bestimmens der Textur von einem Teil oder der Gesamtheit des Objekts umfasst, wobei die Textur die Elemente im Hintergrund des Objekts reproduziert, um das gesamte Objekt oder einen Teil des Objekts in dem endgültigen Bild zu verbergen.

**4.** Verfahren zur Erzeugung eines Bilds nach einem der Ansprüche 1 bis 3, **dadurch gekennzeichnet, dass** die Maske außerdem den gesamten Schatten oder einen Teil des Schattens, der von dem Objekt geworfen wird, verbirgt.

**5.** Verfahren zur Erzeugung eines Bilds nach einem der Ansprüche 1 bis 4, **dadurch gekennzeichnet, dass** es außerdem den folgenden Schritt umfasst:
d) Überlagern einer zweiten Ebene auf dem anfänglichen Bild über der ersten Ebene, wobei die zweite Ebene mindestens ein Element umfasst, das die Maske zum Teil abdeckt.

**6.** Verfahren zur Erzeugung eines Bilds nach einem der Ansprüche 1 bis 5, **dadurch gekennzeichnet, dass** es außerdem vor dem Schritt b) die folgenden Schritte umfasst:

- Bestimmen der Ausrichtung des Objekts in Bezug auf eine Vorrichtung zur Erfassung des anfänglichen Bilds;
- Bestimmen einer charakteristischen Dimension des Objekts in dem anfänglichen Bild.

**7.** Verfahren zur Erzeugung eines Bilds nach Anspruch 6, **dadurch gekennzeichnet, dass** es außerdem vor dem Schritt b) die folgenden Schritte umfasst:

- Erstellen eines dreidimensionalen Modells des Objekts;
- Erstellen der Maske durch geometrische Projektion des dreidimensionalen Modells auf die erste Ebene, wobei das Modell die gleiche Ausrichtung und die gleiche charakteristische Dimension in der ersten Ebene wie das Objekt aufweist.

8. Verfahren zur Erzeugung eines Bilds nach Anspruch 7, **dadurch gekennzeichnet, dass** das Erstellen des Modells des Objekts aus mindestens einem Bild des Objekts allein vorgenommen wird.

9. Verfahren zur Erzeugung eines Bilds nach einem der Ansprüche 1 bis 8, **dadurch gekennzeichnet, dass** das Objekt auf dem Gesicht einer Person getragen wird.

10. Verfahren zur Erzeugung eines Bilds nach Anspruch 9, **dadurch gekennzeichnet, dass** das Erstellen des Modells des Objekts aus mindestens einem Bild des Objekts, das auf dem Gesicht der Person getragen wird, vorgenommen wird.

11. Verfahren zur Erzeugung eines Bilds nach einem der Ansprüche 9 bis 10, **dadurch gekennzeichnet, dass** das Objekt ein Gestell, das sich zu beiden Seiten des Gesichts erstreckt, und mindestens ein Glas, das an dem Gestell montiert ist, umfasst.

12. Verfahren zur Erzeugung eines Bilds nach Anspruch 11, **dadurch gekennzeichnet, dass** es außerdem einen Schritt des Identifizierens des Gestells aus zuvor modellierten und in einer Datenbank gespeicherten Gestellen umfasst, wobei die Maske aus dem Modell des identifizierten Gestells erstellt wird.

13. Verfahren zur Erzeugung eines Bilds nach Anspruch 12, **dadurch gekennzeichnet, dass** das Identifizieren des Gestells durch Erzeugen von Unterstützungskurven, die sich an die Konturen des Gestells anpassen, vorgenommen wird.

14. Verfahren zur Erzeugung eines Bilds nach einem der Ansprüche 12 bis 13, **dadurch gekennzeichnet, dass** das Identifizieren des Gestells auf mindestens einem der folgenden Kriterien basiert:

   - Form des Gestells;
   - Farbe(n) des Gestells;
   - Textur(en) des Gestells;
   - von dem Gestell präsentiertes Logo.

15. Verfahren zur Erzeugung eines Bilds nach einem der Ansprüche 1 bis 14, **dadurch gekennzeichnet, dass** es außerdem einen Schritt des Erstellens einer Repräsentation der Umgebung des Objekts umfasst.

16. Verfahren zur Erzeugung eines Bilds nach Anspruch 15, **dadurch gekennzeichnet, dass** der Schritt des Modifizierens des Aussehens der Maske die folgenden Unterschritte umfasst:

   - geometrisches Projizieren der Repräsentation der Umgebung auf eine Zwischenebene, die auf die erste Ebene überlagert ist;
   - Bestimmen der neuen Farbe eines Pixels der Maske in Abhängigkeit von der Farbe von mindestens einem Pixel der Zwischenebene in der Nähe des Pixels der Maske.

17. Verfahren zur Erzeugung eines Bilds nach Anspruch 16, **dadurch gekennzeichnet, dass** das Bestimmen der neuen Farbe eine Bildbearbeitungsmethode vom "Poisson Image Editing"-Typ einsetzt.

18. Verfahren zur Erzeugung eines Bilds nach einem der Ansprüche 15 und 17, **dadurch gekennzeichnet, dass** es außerdem einen Schritt des Erkennens des Vorhandenseins eines Gesichts in der Umgebung umfasst und dass die Repräsentation der Umgebung ein Modell des erkannten Gesichts umfasst, auf das eine Textur des Gesichts angewendet wird.

19. Verfahren zur Erzeugung eines Bilds nach Anspruch 18, **dadurch gekennzeichnet, dass** es außerdem einen Schritt des Bestimmens der Ausrichtung des Gesichts in Bezug auf die Erfassungsvorrichtung umfasst und dass das Modell des Gesichts im Wesentlichen gemäß der zuvor ermittelten Ausrichtung angeordnet wird.

20. Verfahren zur Erzeugung eines Bilds nach einem der Ansprüche 18 bis 19, **dadurch gekennzeichnet, dass** die Maske, die das Objekt, das auf dem Gesicht getragen wird, zumindest zum Teil abdeckt, aus der geometrischen Projektion des Gesichtsmodells auf die erste Ebene erstellt wird.

21. Verfahren zur Erzeugung eines Bilds nach einem der Ansprüche 18 bis 20, **dadurch gekennzeichnet, dass** es außerdem die folgenden Schritte umfasst:

   - Analysieren von mindestens einer Lichtquelle, die das Gesicht der Person beleuchtet;
   - kolorimetrisches Umwandeln des gesamten Gesichtsmodells oder eines Teils des Gesichtsmodells.

22. Verfahren zur Erzeugung eines Bilds nach einem der Ansprüche 20 bis 21, **dadurch gekennzeichnet, dass** die Farbe eines Pixels in der Textur des Gesichts mithilfe einer Inpainting-Methode aus Farben eines Patchs in der Nähe des Pixels bestimmt wird.

23. Verfahren zur Erzeugung eines Bilds nach Anspruch 22, **dadurch gekennzeichnet, dass** die Position des Patchs sich im Wesentlichen auf der Senkrechten und/oder auf der Vertikalen in Bezug auf das Pixel befindet.

24. Verfahren zur Erzeugung eines Bilds nach einem der Ansprüche 21 bis 23, **dadurch gekennzeichnet, dass** die Farbe eines Pixels in der Textur des Gesichts mithilfe einer Inpainting-Methode aus dem Modell des Gesichts, zuvor ermittelt und ausgerichtet, bestimmt wird, wobei das Modell des Gesichts eine Repräsentation von Augen umfasst.

25. Verfahren zur Erzeugung eines Bilds nach einem der Ansprüche 20 bis 24, **dadurch gekennzeichnet, dass** es außerdem einen Schritt des Identifizierens von mindestens einer Okularzone in der Textur des Gesichts umfasst, wobei die Okularzone der Position eines Auges des erkannten Gesichts entspricht.

26. Verfahren zur Erzeugung eines Bilds nach Anspruch 25, **dadurch gekennzeichnet, dass** das Füllen der Okularzone durch Kennen der Topologie des Auges des erkannten Gesichts vorgenommen wird.

27. Verfahren zur Erzeugung eines Bilds nach einem der Ansprüche 15 bis 17, **dadurch gekennzeichnet, dass** das Erstellen der Repräsentation der Umgebung des Objekts, das auf dem Gesicht einer Person getragen wird, ohne Erkennen des Gesichts in der Umgebung vorgenommen wird.

28. Verfahren zur Erzeugung eines Bilds nach einem der Ansprüche 15 bis 27, **dadurch gekennzeichnet, dass** das Erstellen der Repräsentation der Umgebung einen Unterschritt des Korrigierens der optischen Verzerrung aufgrund eines transparenten Elements, das zwischen der Umgebung und einer Vorrichtung zur Erfassung des anfänglichen Bilds positioniert wird, umfasst.

29. Verfahren zur Erzeugung eines Bilds nach einem der Ansprüche 1 bis 28, **dadurch gekennzeichnet, dass** es auf eine gesamte Sequenz oder einen Teil einer Sequenz von Bildern, die ein Video bilden, angewendet wird.

30. Verfahren zur Erzeugung eines Bilds nach Anspruch 29, **dadurch gekennzeichnet, dass** die Repräsentation der Umgebung und/oder das Modell des Objekts bei jedem Bild der Sequenz aktualisiert werden.

31. Verfahren zur Erzeugung eines Bilds nach einem der Ansprüche 15 bis 30, **dadurch gekennzeichnet, dass** die Repräsentation der Umgebung und/oder das Modell des Objekts anhand von mehreren anfänglichen Bildern, die gemäß mehreren verschiedenen Blickwinkeln genommen werden, aktualisiert werden.

32. Verfahren zur Erzeugung eines Bilds nach einem der Ansprüche 1 bis 31, **dadurch gekennzeichnet, dass** das Erzeugen des endgültigen Bilds in Echtzeit aus dem anfänglichen Bild vorgenommen wird.

33. Erweitertes Realitätsverfahren, das dazu vorgesehen ist, von einer Person genutzt zu werden, die eine tragbare Vorrichtung auf dem Gesicht trägt, **dadurch gekennzeichnet, dass** es die folgenden Schritte umfasst:

   - Erfassen eines Videos der Person, die die tragbare Vorrichtung auf dem Gesicht trägt, in Echtzeit;
   - Anzeigen des Videos in Echtzeit, wobei das Aussehen der tragbaren Vorrichtung durch das Verfahren zur Erzeugung eines Bilds nach einem der Ansprüche 1 bis 32 vollständig oder zum Teil modifiziert wird.

34. Erweitertes Realitätsverfahren nach Anspruch 33, **dadurch gekennzeichnet, dass** die tragbare Vorrichtung in dem in Echtzeit angezeigten Video vollständig oder zum Teil verborgen ist.

**35.** Erweitertes Realitätsverfahren nach einem der Ansprüche 33 bis 34, **dadurch gekennzeichnet, dass** die tragbare Vorrichtung, die von der Person getragen wird, korrigierende Gläser umfasst, die auf die Sehkraft der Person angepasst sind.

**36.** Erweitertes Realitätsverfahren nach einem der Ansprüche 33 bis 35, **dadurch gekennzeichnet, dass** die Person, die die tragbare Vorrichtung trägt, ein virtuelles Objekt prüft, das in dem Video zumindest zum Teil auf die tragbare Vorrichtung, die zum Teil oder vollständig verborgen ist, überlagert ist.

**37.** Erweitertes Realitätsverfahren nach einem der Ansprüche 33 bis 36, **dadurch gekennzeichnet, dass** es einen Schritt des Initialisierens des Modells des Gesichts der Person aus mindestens einem Bild der Person, die die tragbare Vorrichtung nicht auf dem Gesicht trägt, umfasst.

**38.** Erweitertes Realitätsverfahren nach einem der Ansprüche 33 bis 36, **dadurch gekennzeichnet, dass** es einen Schritt des Initialisierens des Modells des Gesichts der Person aus mehreren Bildern der Person, die die tragbare Vorrichtung trägt, umfasst, wobei die Bilder unterschiedlichen Blickwinkeln des Gesichts entsprechen.

**39.** Erweitertes Realitätsverfahren nach einem der Ansprüche 33 bis 38, **dadurch gekennzeichnet, dass** es einen Schritt des Initialisierens des Modells der tragbaren Vorrichtung aus mindestens einem Bild der Vorrichtung, das in einer dedizierten Modellierungsvorrichtung erfasst wird, umfasst.

**40.** Erweitertes Realitätsverfahren nach einem der Ansprüche 33 bis 38, **dadurch gekennzeichnet, dass** es einen Schritt des Initialisierens des Modells der tragbaren Vorrichtung aus mindestens einem Bild der Person, die die tragbare Vorrichtung trägt, umfasst.

**41.** Erweiterte Realitätsvorrichtung (100; 500; 800), die das Prüfen eines virtuellen Objekts (110; 510) durch eine Person (120; 520; 820; 920), die eine Sehvorrichtung (111) trägt, ermöglicht, wobei das virtuelle Objekt die Sehvorrichtung zumindest zum Teil abdeckt, **dadurch gekennzeichnet, dass** sie umfasst:

- mindestens eine Kamera (532; 832), die ein Video der Person erfasst;
- eine Einheit (134; 534) zur Bearbeitung des erfassten Videos, wobei die Bearbeitungseinheit den Großteil oder die Gesamtheit von Bildern des Videos der Sehvorrichtung mithilfe eines Verfahrens zur Erzeugung eines Bilds nach einem der Ansprüche 3 bis 32 zumindest zum Teil verbirgt;
- mindestens einen Bildschirm (130; 530; 830), der das bearbeitete Video der Person anzeigt.

**42.** Erweiterte Realitätsvorrichtung nach Anspruch 41, **dadurch gekennzeichnet, dass** der Bildschirm vertikal ist und dass die Kamera im Wesentlichen in der Ebene des Bildschirms fixiert ist.

**43.** Erweiterte Realitätsvorrichtung nach einem der Ansprüche 41 und 42, **dadurch gekennzeichnet, dass** sie zwei Kameras umfasst, die parallel an einem Rand des Bildschirms um einen Abstand, der zwischen dreißig und fünfzig Zentimeter liegt, beabstandet sind.

**44.** Erweiterte Realitätsvorrichtung nach Anspruch 43, **dadurch gekennzeichnet, dass** sie zudem eine dritte Kamera im Wesentlichen auf der Mittelachse zwischen den zwei ersten Kameras umfasst.

**45.** Erweiterte Realitätsvorrichtung nach einem der Ansprüche 41 bis 44, **dadurch gekennzeichnet, dass** der Bildschirm taktil ist.

**46.** Erweiterte Realitätsvorrichtung nach einem der Ansprüche 41 bis 45, **dadurch gekennzeichnet, dass** das Anzeigen des erfassten und modifizierten Videos in Echtzeit vorgenommen wird.

**47.** Erweiterte Realitätsvorrichtung nach einem der Ansprüche 41 bis 46, **dadurch gekennzeichnet, dass** sie eine Vorrichtung zur Erfassung des dreidimensionalen Modells der Sehvorrichtung umfasst.

**Claims**

**1.** Method (300) for generating a final image (210) from an original image (220) comprising an object (111) suitable to be worn by an individual (120; 520; 820; 920), comprising the steps of:

a) detection (310) of the presence of said object in the initial image;
a') development (360) of a mask covering at least partially the object on the initial image;
b) superposition of a first layer on the initial image, the first layer including the mask at least partially covering the object in the initial image;

**characterized in that** it comprises the following steps:

b') development (355, 357) of at least one texture reproducing at least one element in the background of the object;
c) modification (370) of the appearance of at least one part of the mask by applying said texture to the mask in order to conceal all or part of the object's image in the final image.

2. The image generation method according to claim 1, **characterized in that** the modification of the appearance of the mask comprises a step of substitution of the texture of all or part of the object in the final image.

3. The image generation method according to any of claims 1 to 2, **characterized in that** the modification of the appearance of the mask comprises a step of determination of the texture of all or part of the object, the texture reproducing the elements in the background of the object in order to conceal all or part of the object in the final image.

4. The image generation method according to any of claims 1 to 3, **characterized in that** the mask also covers all or part of the shadow cast by the object.

5. The image generation method according to any of claims 1 to 4, **characterized in that** it also comprises the steps of:

d) superposition of a second layer on the initial image over the first layer, the second layer including an element at least partially covering the mask.

6. The image generation method according to any of claims 1 to 5, **characterized in that** it also comprises prior to step b), the steps of:

- determination of the orientation of the object in relation to a capture device acquiring the initial image;
- determination of a characteristic dimension of the object in the initial image.

7. The image generation method according to claim 6, **characterized in that** it also comprises prior to step b), the steps of:

- development of a three-dimensional model of the object;
- development of the mask by geometric projection of the three-dimensional model on the first layer, the model having on the first layer the same orientation and the same characteristic dimension as the object.

8. The image generation method according to claim 7, **characterized in that** the calculation of the model of the object is created from at least one image of the object alone.

9. The image generation method according to any of claims 1 to 8, **characterized in that** the object is worn on the face of an individual.

10. The image generation method according to claim 9, **characterized in that** the calculation of the model of the object is done using at least an image of the object worn on the face of the individual.

11. The image generation method according to any of claims 9 to 10, **characterized in that** the object comprises a frame extending to either side of the face, and at least one lens assembled to said frame.

12. The image generation method according to claim 11, **characterized in that** it also comprises a step of identifying the frame from the frames previously modeled and stored in a database, the mask having been created based on the model of the identified frame.

13. The image generation method according to claim 12, **characterized in that** the identification of the frame is created by generating support curves adjusted to the contours of the frame.

**14.** The image generation method according to any of claims 12 to 13, **characterized in that** the identification of the frame is based on at least one of the following criteria:

- shape of the frame;
- color(s) of the frame;
- texture(s) of the frame;
- logo presented on the frame.

**15.** The image generation method according to any of claims 1 to 14, **characterized in that** it also comprises a step of calculating a representation of the environment of the object.

**16.** The image generation method according to claim 15, **characterized in that** the step of modification of the appearance of the mask comprises the sub-steps of:

- geometric projection of the representation of the environment on which an intermediate layer is superimposed on the first layer;
- determination of the new color of a pixel of the mask according to the color of at least one pixel of the intermediate layer near the pixel of the mask.

**17.** The image generation method according to claim 16, **characterized in that** the determination of the new color implements an image editing method of the "Fish image editing" type.

**18.** The image generation method according to any of claims 15 to 17, **characterized in that** it also comprises a step of detecting the presence of a face in the environment and **in that** the representation of the environment comprises a model of the detected face to which a texture of the face is applied.

**19.** The image generation method according to claim 18, **characterized in that** it also comprises a step of determining the orientation of the face relative to the capture device and **in that** the model of the face is essentially positioned according to the orientation previously established.

**20.** The image generation method according to any of claims 18 to 19, **characterized in that** the mask at least partially covering the object worn on the face is developed based on the geometric projection of the model of the face on the first layer.

**21.** The image generation method according to any of claims 18 to 20, **characterized in that** it also comprises the steps of:

- analyze of at least one light source lighting the face of the individual;
- conversion of the color(s) of all or part of the model of the face.

**22.** The image generation method according to any of claim 20 to 21, **characterized in that** the color of a pixel on the texture of the face is determined through an inpainting method based on the colors of a patch near the pixel.

**23.** The image generation method according to claim 22, **characterized in that** the position of the patch is essentially located on the perpendicular and/or on the vertical of said pixel.

**24.** The image generation method according to any of claims 21 to 23, **characterized in that** the color of a pixel on the texture of the face is determined through an inpainting method based on the model of the face, previously established and oriented, the model of the face including a representation of the eyes.

**25.** The image generation method according to any of claims 20 to 24, **characterized in that** it also comprises a step of identifying at least one ocular region on the texture of the face, the ocular region corresponding to the position of an eye of the detected face.

**26.** The image generation method according to claim 25, **characterized in that** the filling of the ocular region is made through knowledge of the topology of the eye of the detected face.

**27.** The image generation method according to any of claims 15 to 17, **characterized in that** the development of the representation of the environment of the object worn on the face of an individual is created without detecting the face in the environment.

28. The image generation method according to any of claims 15 to 27, **characterized in that** the development of the representation of the environment comprises a sub-step of correction of the optical distortion caused by a transparent element positioned between the environment and a capture device acquiring the initial image.

29. The image generation method according to any of claims 1 to 28, **characterized in that** it is applied on all or part of a sequence of images forming a video.

30. The image generation method according to claim 29, **characterized in that** the representation of the environment and/or the model of the object are updated at each image of the sequence.

31. The image generation method according to any of claims 15 to 30, **characterized in that** the representation of the environment and/or the model of the object are updated based on multiple initial images acquired according to multiple distinct viewing angles.

32. The image generation method according to any of claims 1 to 31, **characterized in that** the generation of the final image is created in real time from the initial image.

33. Method of augmented reality intended to be used by an individual wearing a portable device on the face, **characterized in that** it comprises the steps of:

   - acquisition in real time of a video of the individual wearing the vision device on the face;
   - display in real time of the video in which the appearance of the vision device is entirely or partially modified by the image generation method as claimed in any of claims 1 to 32.

34. Method of augmented reality according to claim 33, **characterized in that** the portable device is entirely or partially concealed in the video displayed in real time.

35. Method of augmented reality according to any of claims 33 to 34, **characterized in that** the portable device worn by the individual comprises corrective lenses adapted to the vision of the individual.

36. Method of augmented reality according to any of claims 33 to 35, **characterized in that** the individual wearing the portable device tries on a virtual object superimposed at least in part in the video on the portable device partially or totally concealed.

37. Method of augmented reality according to any of claims 33 to 36, **characterized in that** it comprises a step of initializing the model of the face of the individual based on at least one image of the individual not wearing the portable device on the face.

38. Method of augmented reality according to any of claims 33 to 36, **characterized in that** it comprises a step of initializing the model of the face of the individual based on multiple images of the individual wearing the portable device, the images corresponding to different viewing angle of the face.

39. Method of augmented reality according to any of claims 33 to 38, **characterized in that** it comprises a step of initializing the model of the portable device based on at least an image of said device acquired in a dedicated modeling device.

40. Method of augmented reality according to any of claims 33 to 38, **characterized in that** it comprises a step of initializing the model of the portable device based on at least one image of the individual wearing the portable device.

41. Augmented reality device (100 ; 500 ; 800) enabling the trying on of a virtual object (110 ; 510) by an individual (120 ; 520 ; 820 ; 920) wearing a vision device (111), the virtual object at least partially covering the vision device, **characterized in that** it comprises:

   - at least one camera (532 ; 832) capturing a video of the individual;
   - a processing unit (134 ; 534) for the video captured, the processing unit at least partially concealing the majority or the entirety of the images of the video the vision device through an image generation method as claimed in any of claims 3 to 32;
at least a screen (130 ; 530 ; 830) displaying the processed video of the individual.

42. Augmented reality device according to claim 41, **characterized in that** the screen is vertical and **in that** the camera is fixed accordingly in the plane of the screen.

43. Augmented reality device according to any of claims 41 to 42, **characterized in that** it comprises two cameras spaced apart, parallel to an edge of the screen, at a distance comprised between thirty and fifty centimeters.

44. Augmented reality device according to claim 43, **characterized in that** it additionally comprises a third camera essentially placed on the median axis between the two first cameras.

45. Augmented reality device according to any of claims 41 to 44, **characterized in that** the screen is touch-sensitive.

46. Augmented reality device according to any of claims 41 to 45, **characterized in that** the display of the captured and modified video is made in real time.

47. Augmented reality device according to any of claims 41 to 46, **characterized in that** it comprises a capture device of a three-dimensional model of the vision device.

FIG. 1

FIG. 2

300

310

320

330

340

341

342

343

350

355

356

357

358

359

360

370

380

FIG. 3

(a)

(b)

(c)

(d)

(e)

FIG. 4

FIG. 5

220

471

111

120

472₁

472₂

470

$TM_a$

**(a)**

**(b)**  $I_{bg} = Tm_a \cup TM_{bg}$

$TM_{bg}$   $TM_a$

**(c)**  $I_{bg} \cup TMB_{g\_f}$

**(d)**  $I_{bg} \cup TMB_{g\_f} \cup TMB_{g\_e}$

**(e)**  $I_{bg} \cup TMB_{g\_f} \cup TMB_{g\_e} \cup TB_{fg}$

FIG. 6

FIG. 7

FIG. 8

FIG. 9

FIG. 10

FIG. 11

FIG. 12

**RÉFÉRENCES CITÉES DANS LA DESCRIPTION**

**Documents brevets cités dans la description**

- WO 2010042990 A
- FR 2955409
- EP 2678804 A
- FR 2971873
- FR 1050305
- FR 1551531

**Littérature non-brevet citée dans la description**

- **P. PEREZ ; M. GANGNET.** *Poisson Image Editing*
- **BLANZ ; VETTER.** *Face Recognition Based on Fitting a 3D Morphable Model,* 2003
- **PAYSAN et al.** *A 3D Face Model for Pose and Illumination Invariant Face Récognition,* 2009
- **AHLBERG.** CANDIDE-3 - An Updated Parameterised Face. *technical report,* 2001
- **CHANG et al.** *Active Attentional Sampling for Speed-up of Background Substraction,* 2012